# EUROPEAN PATENT APPLICATION

(11) **EP 4 808 233 A1**
(43) Date of publication of application: **16.09.2026**
(21) Application number: 24925264.4
(22) Date of filing: 21.02.2024
(51) Int. Cl.: H04W 72/044

(54) **COMMUNICATION METHOD, APPARATUS AND DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN); CUI, Shengjiang, Dongguan, Guangdong 523860 (CN)
(74) Representative: Penza, Giancarlo
(86) International application number: PCT/CN2024/077988
(87) International publication number: WO 2025/175509

(57) **Abstract**

Embodiments of the present application provide a communication method, applied to a first device. The method comprises: sending a plurality of first channels, wherein the plurality of first channels occupy different time ranges and the same frequency range, different first channels among the plurality of first channels are received by different ambient Internet of Things (A-IoT) devices or the same A-IoT device, and the first channels are control channels or data channels. The method explicitly solves the problem of how the first device sends the control channels/data channels to the A-IoT device in the A-IoT. In addition, since the mode used by the first device to send the plurality of first channels is a time division mode, the A-IoT device can use a radio frequency receiver to receive the first channels from the first device without the help of a high-performance filter, thereby reducing the complexity and energy loss of the A-IoT device receiving the first channels.

## Description

### TECHNICAL FIELD

The embodiments of the present disclosure relate to the technical field of communications, and more particularly to, a communication method, an apparatus, a device, a chip, and a storage medium.

### BACKGROUND

An Ambient Internet of Things (A-IoT) device means an IoT device being capable of using various environmental energies (such as, the wireless radio frequency energy, the light energy, the solar energy, the thermal energy, the mechanical energy) to drive itself. The A-IoT device usually has many advantages, such as, free of conventional battery, maintenance-free, small size, low complexity, low cost, and long service life. At present, the A-IoT device may communicate directly with a network device, or the A-IoT device may communicate with the network device through an intermediate node. However, in the A-IoT, how to transmit control channels/data channels to the A-IoT device is an unsolved problem.

### SUMMARY

The embodiments of present disclosure provide a communication method, an apparatus, a device, a chip, and a storage medium.

In a first aspect, an embodiment of the present disclosure provides a communication method applied to a first device. The method includes: multiple first channels are transmitted. The multiple first channels occupy different time ranges and a same frequency range. Different first channels among the multiple first channels are received by different A-IoT devices or a same A-IoT device. The first channels are control channels or data channels.

In a second aspect, an embodiment of the present disclosure provides a communication method applied to an A-IoT device. The method includes: at least one first channel is received from a first device. The at least one first channel is all or a part of multiple first channels transmitted by the first device. The multiple first channels occupy different time ranges and a same frequency range. The first channels are control channels or data channels.

In a third aspect, an embodiment of the present disclosure provides a communication method applied to a first device. The method includes: multiple first channels are transmitted. The multiple first channels occupy different frequency ranges and a same time range. Different first channels among the multiple first channels are received by different A-IoT devices or a same A-IoT device. The first channels are control channels or data channels.

In a fourth aspect, an embodiment of the present disclosure provides a communication method applied to an A-IoT device. The method includes: at least one first channel is received from a first device. The at least one first channel is all or a part of multiple first channels transmitted by the first device. The multiple first channels occupy different frequency ranges and a same time range. The first channels are control channels or data channels.

In a fifth aspect, an embodiment of the present disclosure provides a communication device. The device includes a first communication unit configured to transmit multiple first channels. The multiple first channels occupy different time ranges and a same frequency range. Different first channels among the multiple first channels are received by different A-IoT devices or a same A-IoT device. The first channels are control channels or data channels.

In a sixth aspect, an embodiment of the present disclosure provides a communication device. The device includes a second communication unit configured to receive at least one first channel from a first device. The at least one first channel is all or a part of multiple first channels transmitted by the first device. The multiple first channels occupy different time ranges and a same frequency range. The first channels are control channels or data channels.

In a seventh aspect, an embodiment of the present disclosure provides a communication device. The device includes a third communication unit configured to transmit multiple first channels. The multiple first channels occupy different frequency ranges and a same time range. Different first channels among the multiple first channels are received by different A-IoT devices or a same A-IoT device. The first channels are control channels or data channels.

In an eighth aspect, an embodiment of the present disclosure provides a communication device. The device includes a fourth communication unit configured to receive at least one first channel from a first device. The at least one first channel is all or a part of multiple first channels transmitted by the first device. The multiple first channels occupy different frequency ranges and a same time range. The first channels are control channels or data channels.

In a ninth aspect, an embodiment of the present disclosure provides a communication device including: a memory, a processor and a transceiver. The memory is configured to store a computer program. The processor is connected to the memory is configured to invoke and execute the computer program from the memory, to implement the method of any one of the first to fourth aspects. The transceiver is configured to receive and transmit information in the procedure of transceiving information with other devices.

In a tenth aspect, an embodiment of the present disclosure provides a chip. The chip includes a processor and a transceiver. The processor is configured to invoke and execute a computer program from a memory, to enable a device on which the chip is mounted to perform the method of any one of the first aspect to the fourth aspect. The transceiver is configured to receive and transmit information in the procedure of transceiving information with a device or a chip.

In an eleventh aspect, an embodiment of the present disclosure provides a computer-readable storage medium configured to store a computer program, where the computer program causes a computer to perform the method of any one of the first aspect to the fourth aspect.

In a twelfth aspect, an embodiment of the present disclosure provides a computer program product including computer program instructions, where the computer program instructions cause a computer to perform the method of any one of the first aspect to the fourth aspect.

In a thirteenth aspect, an embodiment of the present disclosure provides a computer program that, when executed on a computer, causes the computer to perform the method of any one of the first aspect to the fourth aspect.

In the method in the embodiments of the present disclosure, the first device may transmit multiple first channels. The multiple first channels occupy different time ranges and the same frequency range. Different first channels among the multiple first channels may be received by different A-IoT devices or the same A-IoT device. That is to say, the first device may transmit the multiple first channels in a time division manner, and different first channels among the multiple first channels may be received by different A-IoT devices or the same A-IoT device. The method in the embodiments of the present disclosure clarifies the problem of how the first device transmits the control channels/data channels to the A-IoT device in the A-IoT. In addition, since the first device transmits the multiple first channels in the time division manner, the A-IoT device may receive, by using a radio frequency receiver, the first channel from the first device, without using a high-performance filter, thereby facilitating reducing the complexity and energy consumption of the A-IoT device receiving the first channel.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of an application scenario of embodiments of the present disclosure;
FIG. 2 is an example diagram of an A-IoT communication system according to an embodiment of the present disclosure;
FIG. 3 is a schematic diagram of a principle of Radio Frequency (RF) power harvesting according to an embodiment of the present disclosure;
FIG. 4 is a schematic diagram of a principle of back scattering communication according to an embodiment of the present disclosure;
FIG. 5 is a schematic diagram of a circuit structure of resistive load modulation according to an embodiment of the present disclosure;
FIG. 6 is a first schematic diagram of an A-IoT device communicating with a network device according to an embodiment of the present disclosure;
FIG. 7 is a second schematic diagram of an A-IoT device communicating with a network device according to an embodiment of the present disclosure;
FIG. 8 is a first schematic flowchart of a communication method according to an embodiment of the present disclosure;
FIG. 9 is a second schematic flowchart of a communication method according to an embodiment of the present disclosure;
FIG. 10 is an example diagram of a fixed channel according to an embodiment of the present disclosure;
FIG. 11 is a schematic diagram of transmitting two fixed channels within one Orthogonal Frequency Divisition Multiplexing (OFDM) symbol according to an embodiment of the present disclosure;
FIG. 12 is a schematic diagram of a chip length according to an embodiment of the present disclosure;
FIG. 13 is a schematic diagram of dividing a carrier bandwidth into two frequency segments according to an embodiment of the present disclosure;
FIG. 14 is a first schematic diagram of a structural composition of a communication device according to an embodiment of the present disclosure;
FIG. 15 is a second schematic diagram of a structural composition of a communication device according to an embodiment of the present disclosure;
FIG. 16 is a third schematic diagram of a structural composition of a communication device according to an embodiment of the present disclosure;
FIG. 17 is a fourth schematic diagram of a structural composition of a communication device according to an embodiment of the present disclosure;
FIG. 18 is a schematic structural diagram of a communication device according to an embodiment of the present disclosure;
FIG. 19 is a schematic structural diagram of a chip in an embodiment of the present disclosure; and
FIG. 20 is a schematic structural diagram of a communication system according to an embodiment of the present disclosure.

### DETAILED DESCRIPTION

The technical solutions of the embodiments of the present disclosure would be described in conjunction with the accompanying drawings in the embodiments of the present disclosure. It is apparent that the described embodiments are only part of the embodiments of the present disclosure, not all the embodiments. Based on the embodiments in the present disclosure, all other embodiments obtained by those of ordinary skill in the art without creative work shall fall within the scope of protection of the present disclosure.

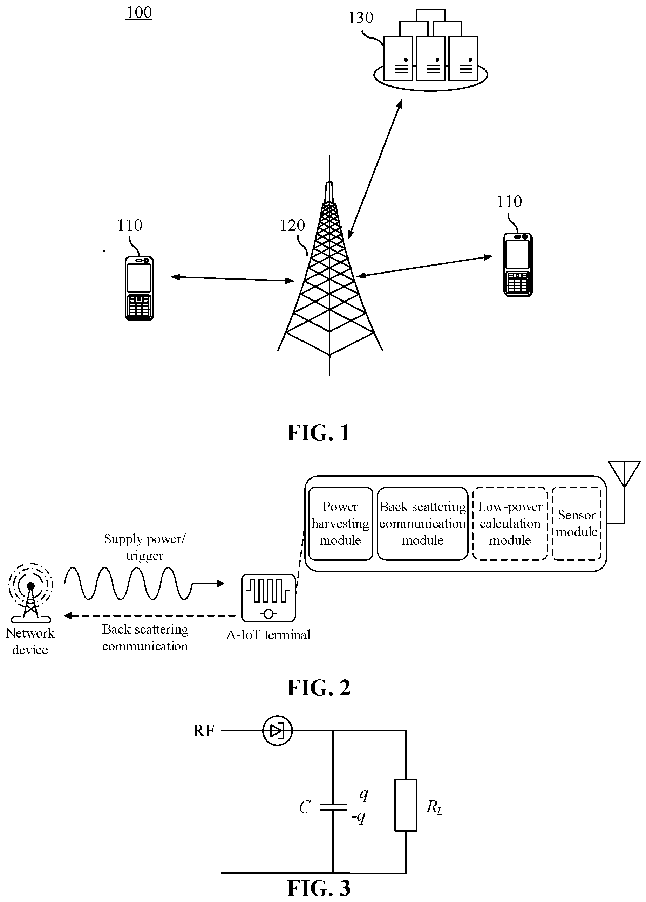

FIG. 1 is a schematic diagram of an application scenario of the embodiments of the present disclosure.

As shown in FIG. 1, the communication system 100 may include a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrated with reference to the communication system 100 only, but are not limited thereto. That is to say, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an Enhanced Machine-Type Communications (eMTC) system, a 5-th Generation (5G) communication system (also referred to as a New Radio (NR) communication system), 6G communication system, or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., the UE) in the coverage.

The network device 120 may be an Evolutional Node B (eNB or eNodeB) in an LTE system, a Next Generation Radio Access Network (NG RAN) device, a base station (gNB) in an NR system, or a base station in the 6G system, or a wireless controller in a Cloud Radio Access Network (CRAN). The network device may further be a relay station, an access point, a vehicle-mounted device, a wearable device, a hub, a switch, a network bridge, a router, a network device in a future evolved Public Land Mobile Network (PLMN) or the like.

The terminal device 110 may be any terminal device, which includes, but not limited to, a terminal device that has a wired or wireless connection to the network device 120 or other terminal devices.

For example, the terminal device 110 may be an access terminal, a UE, a user unit, a user station, a mobile station, a mobile platform, a remote station, a remote terminal, a mobile device, a user terminal, a terminal, a wireless communication device, a user agent, or user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, a terminal device in a 6G network, a terminal device in a future evolved network or the like.

The terminal device 110 may be applied to Device to Device (D2D) communication.

The wireless communication system 100 may further include a core network device 130 that communicates with the network deice 120. The core network device 130 may be a 5G core (5GC) device, such as an Access and Mobility Management Function (AMF), an Authentication Server Function (AUSF), a User Plane Function (UPF), or a Session Management Function (SMF). In some embodiments, the core network device 130 may also be an Evolved Packet Core (EPC) device in the LTE network, for example, a Session Management Function + Core Packet Gateway (SMF+PGW-C) device. It is to be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a Next Generation (NG) interface, to realize communication.

For example, the terminal device may establish an air interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may interact the user plane data with a data network through an NG interface 6 (abbreviated as N6). The AMF may establish a control plane signaling connection with the SMF through an NG interface 11 (abbreviated as N11). The SMF may establish a control plane signaling connection with a Policy Control Function (PCF) through an NG interface 7 (abbreviated as N7).

FIG. 1 exemplarily illustrates one network device, one core network device and two terminal devices. Optionally, the communication system 100 may include multiple network devices, and another number of terminal devices may be included in the coverage of each network device, which is not limited in the embodiments of the present disclosure.

It is to be noted that FIG. 1 only illustrates systems to which the present disclosure is applied by way of examples, and the methods in the embodiments of the present disclosure may also be applied to other systems. In addition, the terms "system" and "network" are often used interchangeably herein. Herein, the term "and/or" in the present disclosure is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or". It is further to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B. It is further to be understood that the term "correspond" mentioned in the description of the embodiments of the present disclosure may mean that there is a direct correspondence or an indirect correspondence between the two, may also mean that there is an association relationship between the two, and may also be a relationship between indication and being indicated, configuration and being configured, etc. It is further to be understood that the term "predefined" or "predefined rule" mentioned in the embodiments of the present disclosure may be achieved by pre-storing corresponding codes, tables or other means used for indicating relevant information in devices (e.g., including the terminal devices and the network devices), and the specific implementation thereof is not limited in the present disclosure. For example, predefined may refer to what is defined in the protocol. It is further to be understood that in the embodiments of the present disclosure, the "protocol" may be a standard protocol in the communication field. For example, the protocol may include a LTE protocol, a NR protocol, and related protocols applied in future communication systems, which are not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

### 1. Communication principles of the A-IoT.

Power harvesting and back scattering communication technologies are used in the A-IoT communication. The A-IoT device means the IoT device being capable of using various environmental energies (such as, the wireless radio frequency energy, the light energy, the solar energy, the thermal energy, the mechanical energy) to drive itself. The A-IoT device may not have the energy storage capability or have very limited energy storage capability (e.g., using a capacitor with a capacity of tens of µF (microfarads)). Compared with the existing IoT device, the A-IoT device has many advantages, such as, free of conventional battery, maintenance-free, small size, low complexity, low cost, and long service life.

In the embodiments of the present disclosure, the A-IoT devices may also be referred to as a zero-power device.

FIG. 2 is an example diagram of an A-IoT communication system according to an embodiment of the present disclosure. As shown in FIG. 2, the A-IoT communication system may include a network device and an A-IoT device. The network device may be configured to transmit, to the A-IoT device, a wireless power supply signal and a downlink communication signal; and receive a back scattering signal of the A-IoT device. A basic A-IoT device includes a power harvesting module, a back scattering communication module, and a low-power calculation module. In addition, the A-IoT device may also include a memory or a sensor, configured to store some basic information (such as an item identifier) or acquire sensing data such as an environment temperature and an environment humidity.

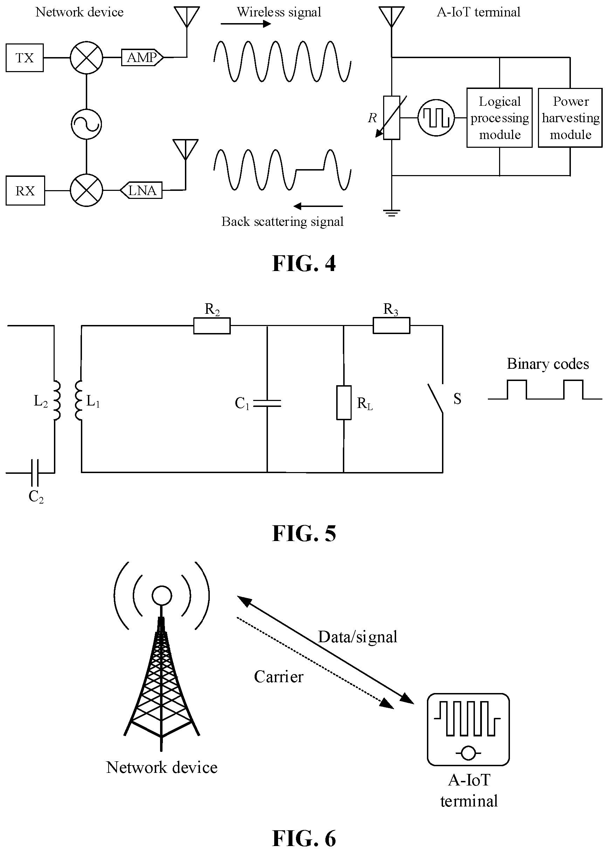

The key technologies of the A-IoT include the RF power harvesting and back scattering communication. The RF power harvesting and back scattering communication are described below with reference to FIG. 3 and FIG. 4, respectively.

### 1) RF power harvesting.

FIG. 3 is a schematic diagram of a principle of Radio Frequency (RF) power harvesting according to an embodiment of the present disclosure. As shown in FIG. 3, the RF power harvesting module may include a tunnel diode, a capacitor C (including a positive electrode +q and a negative electrode -q) and a resistor R_{L}, and the RF signal may pass through the tunnel diode to complete the RF power harvesting procedure. The RF power harvesting module harvests space electromagnetic wave energy based on the principle of electromagnetic induction, so as to obtain energy required to drive the A-IoT device, for example, for driving a low-power demodulation and modulation module, a sensor, and internal storage reading. Therefore, the A-IoT device does not need a traditional battery.

### 2) Back scattering communication.

FIG. 4 is a schematic diagram of a principle of back scattering communication according to an embodiment of the present disclosure. As shown in FIG. 4, the network device may include a Transmitter (TX), an Amplifier (AMP), a Receiver (RX), and a Low Noise Amplifier (LNA). The A-IoT device (or the zero-power device) may include a resistor R, a logic processing module, and a power harvesting module. The A-IoT device 420 receives a wireless signal sent by a network device 410; modulates the wireless signal; loads information to be transmitted; and radiates the modulated wireless signal (i.e., the back scattering signal) from an antenna. Such information transmission procedure is referred to as the back scattering communication. The back scattering and load modulation functions are inextricably linked. The load modulation is to adjust and control circuit parameters of an oscillation circuit of the A-IoT device according to the beat of a data stream, so as to enable the parameters such as the impedance of the electronic tag to vary accordingly, thereby completing a modulation procedure. A load modulation mainly includes resistive load modulation and capacitive load modulation.

FIG. 5 is a schematic diagram of a circuit structure of resistive load modulation according to an embodiment of the present disclosure. As shown in FIG. 5, the circuit structure may include an inductor L₁, an inductor L₂, a capacitor C₁, a capacitor C₂, a resistor R₂, a resistor R₃, and a load R_{L}. In the resistive load modulation, a load R_{L} is connected in parallel with a resistor R₃, and the switch S is controlled to be turned on or turned off based on a binary data stream (i.e., binary coding), thereby controlling the resistor R₃ to be turned on or turned off. A circuit voltage is changed due to the turn-on and off of the resistor R₃, so that Amplitude Shift Keying (ASK) is implemented. That is to say, the modulation and transmission of the signals may be implemented by adjusting amplitudes of the back scattering signals of the A-IoT device. Similarly, during capacitive load modulation, changes in a circuit resonance frequency may be achieved by turning on or off a capacitor, so as to implement Frequency Shift Keying (FSK). That is to say, the modulation and transmission of the signals may be implemented by adjusting the working frequencies of back scattering signals of the A-IoT device.

Therefore, the A-IoT device performs information modulation on an incoming-wave signal by means of the load modulation, and a back scattering communication procedure is implemented. The A-IoT device has following advantages.
a) The A-IoT device does not actively transmits a signal, and thus the A-IoT device does not need a complex RF link, such as, a Power Amplifier (PA), a RF filter, and the like.
b) The A-IoT device does not actively generate a high-frequency signal, and thus the terminal does not need a high-frequency crystal oscillator.
c) The A-IoT device does not need to consume the energy thereof during the transmission of the signal with the help of the back scattering communication.

It is to be understood that the aforementioned A-IoT device is only a possible implementation of the A-IoT device. In another possible implementation, the A-IoT device may support actively transmitting signals.

### 2. A category of the A-IoT devices

The A-IoT devices may be classified, based on their energy source and usage manner, into a passive A-IoT device, a semi-passive A-IoT device, and an active A-IoT device.

### 1) The passive A-IoT device.

In the passive A-IoT device, there is no need to provide a battery, and when the A-IoT device approaches the network device (e.g., a reader-writer of a Radio Frequency Identification (RFID) system), the A-IoT device is within a near field range formed through radiation of an antenna of the network device. Therefore, an antenna of the A-IoT device generates an induction current through electromagnetic induction, and then the induction current drives a low-power chip circuit of the passive A-IoT device, so as to demodulate a signal in the forward link (that is a downlink from the network device to the passive A-IoT device) and modulate a signal in the reverse link (that is an uplink from the passive A-IoT device to the network device) . For a back scattering link, the passive A-IoT device perform the transmission of the signal by means of back scattering.

Therefore, regardless of the forward link or the reverse link, the passive A-IoT device does not need to be driven by a built-in battery.

The passive A-IoT device does not need the battery, and an RF circuit and a baseband circuit thereof are very simple, for example, devices such as a Low Noise Amplifier (LNA), a PA, a crystal oscillator, and an Analog-to-Digital Converter (ADC) are not required, so that the passive A-IoT device has various advantages of being small in size, light in weight, cheap in price, and long in service life.

### 2) The semi-passive A-IoT device.

In the semi-passive A-IoT device, the battery is also not provided, but the RF power harvesting module may be configured to harvest the radio wave energy, or a solar/ light/thermal/kinetic power harvesting module are configured to harvest the energy, and the harvested energy is stored in an energy storage unit (for example, a capacitor). After the energy is obtained, the energy storage unit may drive the low-power chip circuit of the semi-passive A-IoT device, so as to demodulate a signal in the forward link and modulate a signal in the reverse link. For the back scattering link, the semi-passive A-IoT device performs the transmission of the signal by means of the back scattering implementation.

Therefore, regardless of the forward link or the reverse link, the semi-passive A-IoT device does not need to be driven by a built-in battery, and although energy stored by the capacitor is used during operation, the energy is derived from radio energy harvested by the power harvesting module.

The semi-passive A-IoT device inherits various advantages of the passive A-IoT device, so that the semi-passive A-IoT device has various advantages of being small in size, light in weight, cheap in price, and long in service life.

### 3) The active A-IoT device.

In some scenarios, the A-IoT device used may also be an active A-IoT device, and the active A-IoT device may be provided with a built-in battery (i.e., the traditional battery, such as a dry battery, a rechargeable lithium battery). The battery is configured to drive the low-power chip circuit of the active A-IoT device, so as to demodulate a signal in the forward link and modulate a signal in the reverse link. However, for the back scattering link, the active A-IoT device performs the transmission of the signal by means of back scattering implementation. Therefore, zero power of the active A-IoT device is mainly reflected in the fact that signal transmission of the reverse link does not require the power of the active A-IoT device per se, but uses the back scattering manner. Although the active A-IoT device uses the battery, the power consumption is relatively low due to the sampling ultra-low-power-communication technology, so that the service life of the battery can be greatly improved.

The built-in battery in the active A-IoT device may supply power to the RFID chip, to increase the read-write distance of the tag and improve the reliability of the communication. Therefore, the active A-IoT device may be applied in some scenarios having relatively high requirements on communication distance, reading delay, etc.

In the embodiments of the present disclosure, the A-IoT device based on a transmitter type may include the following three types.

### 1) The A-IoT device based on the back scattering.

The A-IoT device based on the back scattering may transmit uplink data by means of the back scattering. The A-IoT device based on the back scattering is not provided with an active transmitter for the active transmission, but only provided with a transmitter for the back scattering. Therefore, when the A-IoT device based on the back scattering transmits the uplink data, the network device needs to provide a carrier, and the A-IoT device based on the back scattering performs back scattering based on the carrier, thereby implementing the data transmission.

### 2) The A-IoT device based on an active transmitter.

The A-IoT device based on the active transmitter transmits the uplink data by using the active transmitter with a capability of the active transmission. Therefore, when the A-IoT device based on the active transmitter transmits the uplink data, the A-IoT device based on the active transmitter transmits the uplink data by using the active transmitter thereof, and does not require the network device to provide the carrier. The active transmitter suitable for the A-IoT device may be, for example, an ultra-low-power ASK transmitter, an ultra-low-power FSK transmitter, etc. In the case where this type of transmitter transmits a signal of 100 µw (microwatts), the overall power consumption may be reduced to 400-600 µw.

### 3) The A-IoT device with both the back scattering and the active transmitter.

The A-IoT device with both the back scattering and the active transmitter may support both the back scattering and the active transmitter. Such A-IoT device may determine which manner of transmitting the uplink signal to be used according to different situations (such as, the power level, the available environmental energy), or based on the scheduling of the network device, for example, performing the transmission of the uplink signal in the back scattering manner or performing the active transmission of the uplink signal by sing the active transmitter.

### 3. Low-power IoT based on a cellular network

At present, the cellular IoT is booming. The IoT technologies, such as the Narrow Band Internet of Things (NB-IoT), Machine Type Communication (MTC), and Reduced Capability (RedCap), have been standardized by the 3rd Generation Partnership Project (3GPP), but IoT communication requirements in many scenarios cannot be satisfied. For example, the requirements may include a strict communication environment (high temperature, extremely low temperature, high humidity, high pressure, high radiation or high-speed movement, etc.), a form requirement of extremely small size for the terminal, and extremely low cost.

In order to cover these requirements of the IoT communication that are not satisfied, the IoT with ultra-low cost, extremely-small size, battery-free/maintenance-free also is required to be developed in the cellular network, and the A-IoT just satisfies this requirement.

Based on the discussion of scenarios to which the A-IoT is applied by the 3GPP System Architecture (SA), the A-IoT may be applied in at least the following four types of scenarios.
1) Object recognition, such as, logistics, management of production line products, supply chain management.
2) Ambient monitoring, such as, monitoring of a temperature, a humidity and a harmful gas in working environment and natural environment.
3) Positioning, such as, indoor positioning, intelligent object searching, production line item positioning, etc.
4) Intelligent control, such as, intelligent control of various electrical appliances in the smart home (turning on and off an air conditioner, adjusting temperature), and intelligent control (automatic watering, fertilization) of various facilities in agricultural greenhouses.

In the low-power IoT based on the cellular network, an A-IoT device may communicate directly with a network device, or an A-IoT device may communicate with a network device through an intermediate node.

Exemplarily, as shown in FIG. 6, the A-IoT device may transmit and receive carriers, data, or signals directly from the network device and transmit or backscatter the data or signals to the network device.

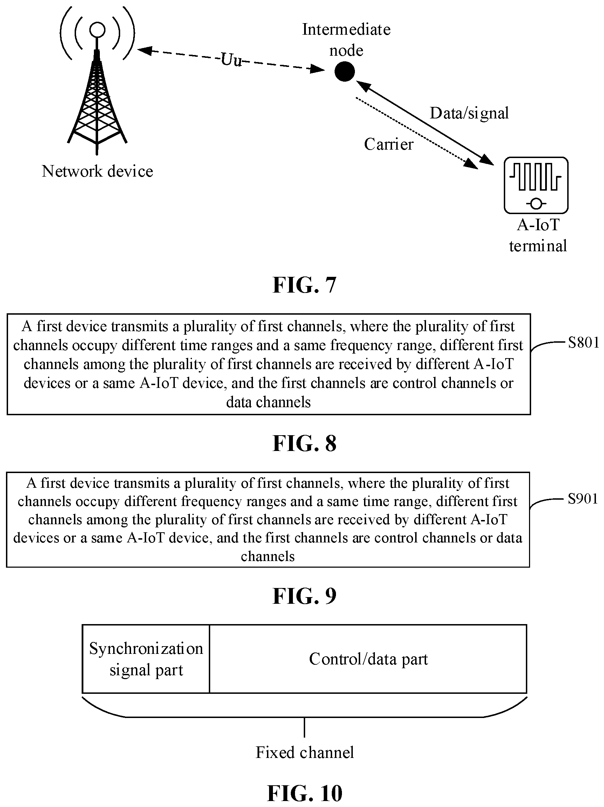

Exemplarily, as shown in FIG. 7, an A-IoT device may communicates with a network device through the intermediate node. In this scenario, the network device may communicate with the intermediate node through the Uu link, and the intermediate node may transmit the carrier, the data, or the signal to the A-IoT device. Correspondingly, the A-IoT device may transmit or backscatter the data or signal to the intermediate node. For example, the intermediate node may be a terminal device.

The related technologies/terms involved in the present disclosure are briefly in the foregoing, which will not be repeated in the following.

As may be seen from FIG. 6 and FIG. 7, the A-IoT device may communicate directly with the network device, or the A-IoT device may communicate with the network device through the intermediate node. In the A-IoT, when the network device/intermediate node communicates with the A-IoT device, the network device/intermediate node needs to transmit data channels and/or control channels to the A-IoT device. Therefore, in the A-IoT, how the network device/intermediate node transmits the control channels/data channels to the A-IoT device is a problem to be solved urgently.

In view of this, the present disclosure provides a communication method, an apparatus, a device, a chip, and a storage medium. In the method, the first device may transmit multiple first channels (the first channels are control channels or data channels). The multiple first channels occupy different time ranges and the same frequency range. Different first channels among the multiple first channels may be received by different A-IoT devices or the same A-IoT device. That is to say, the first device may transmit the control channel or the data channel to the at least one A-IoT device in a time division manner.

In order to facilitate understanding of the technical solutions of the embodiments of the present disclosure, the technical solutions of the present disclosure will be described in detail below through specific embodiments. The above related technologies used as optional solutions may be combined with technical solution of the embodiments of the present disclosure in various ways, and the combinations belong to the scope of protection of the embodiments of the present disclosure. Embodiments of the present disclosure include at least some of the following content.

FIG. 8 is a first schematic flowchart of a communication method according to an embodiment of the present disclosure. As shown in FIG. 8, the method may include a following operation S801.

In operation S801, a first device transmits multiple first channels, where the multiple first channels occupy different time ranges and a same frequency range, different first channels among the multiple first channels are received by different A-IoT devices or a same A-IoT device, and the first channels are control channels or data channels.

In the embodiments of the present disclosure, the first device may transmit the multiple first channels. The multiple first channels occupy different time ranges and a same frequency range (i.e., time ranges occupied by the multiple first channels are different, and frequency ranges occupied by the multiple first channels are the same). Herein, different first channels among the multiple first channels may be received by different A-IoT devices or the same A-IoT device. That is to say, the first device may transmit the multiple first channels in a time division manner, and different first channels among the multiple first channels may be received by different A-IoT devices or the same A-IoT device.

For example, it is assumed that the multiple first channels transmitted by the first device include a first channel#1 and a first channel#2, the first channel#1 and the first channel#2 may be received by different A-IoT devices, i.e., the first channel#1 and the first channel#2 are transmitted to different A-IoT devices. Alternatively, the first channel#1 and the first channel#2 may be received by the same A-IoT device, i.e., the first channel#1 and the first channel#2 are transmitted to the same A-IoT device.

Correspondingly, for a certain A-IoT device, the A-IoT device may receive at least one first channel from the first device, the at least one first channel may be all or a part of the multiple first channels transmitted by the first device, and the multiple first channels occupy different time ranges and the same frequency range. For example, if the first device transmits N first channels, at least one first channel received by the A-IoT device is all or a part of the N first channels. In other words, the all or part of the N first channels are transmitted to the A-IoT device.

In the embodiment, the first channel may be a control channel or a data channel. The control channel (e.g., a downlink control channel used for indicating downlink transmission or scheduling uplink transmission) may carry control information, and the data channel may carry data information. For example, the control channel may be a fixed channel, and the data channel may be a fixed channel or a variable channel. The fixed channel and the variable channel may be collectively referred to as an A-IoT channel.

Exemplarily, the fixed channel refers to a channel on which the A-IoT device may perform reception and decoding without relying on dynamic indication information. The fixed channel may include a specific signal. For example, in a case where the fixed channel is the control channel, the fixed channel at least includes a synchronization signal part and a control information part; and in a case where the fixed channel is the data channel, the fixed channel at least includes a synchronization signal part and a data information part.

Exemplarily, the variable channel refers to a channel on which one or more of the length, the waveform, the coding scheme, the coding efficiency, the modulation scheme, and the like, are variable, and the A-IoT device needs to receive and decode the variable channel according to a dynamic indication. The variable channel may include a specific signal. For example, variable channel may include at least the synchronization signal part and the data information part.

In some embodiments, the first device may be the network device (e.g., the network device in FIG. 6) or the terminal device (e.g., the intermediate node in FIG. 7). In a case where the first device is the network device, the first device may transmit the first channels within a downlink carrier and/or a downlink slot. In a case where the first device is the terminal device, the first device may transmit the first channels within an uplink carrier and/or an uplink slot. In some scenarios, the first device may also be referred to as an interrogator node.

According to the method of the embodiment, the first device transmits the multiple first channels in the time division manner. In this way, the A-IoT device may receive, by using a radio frequency receiver, the first channel from the first device, without using the high-performance filter, thereby facilitating reducing the complexity and energy consumption of the A-IoT device receiving the first channel.

In some embodiments, the multiple first channels transmitted by the first device may be located within one or more OFDM symbols.

For example, the multiple first channels may be located within one OFDM. In this case, a duration occupied by one first channel may be less than the length of one OFDM symbol. For another example, the multiple first channels may be located within multiple OFDMs. In this case, the duration occupied by one first channel may be greater than, less than, or equal to the length of one OFDM symbol.

In some embodiments, in a case where the first device is the network device, the one or more OFDM symbols are located at an end of one slot (e.g., the first slot). In a case where the first device is the terminal device, the one or more OFDM symbols are located at a start and/or an end of one slot.

It is to be understood that if the first device is the network device, the first channel may be transmitted within a downlink carrier and/or a downlink slot. In this case, since the start of one slot may be configured with a common control channel transmission resource of a cell, the common control channel transmission resource may be used for performing the transmission of a Physical Downlink Control Channel (PDCCH), in order to avoid interference from the PDCCH on the A-IoT device, the first channels should not be transmitted on an OFDM symbol on which the common control channel transmission resource of the cell exists, i.e., the start of one slot is not used for transmitting the first channels. In addition, the network device may also transmit, within one slot, the PDSCH to other devices other than the A-IoT device, and the time-domain resources occupied by the PDSCH are consecutive. Therefore, in order to avoid both the influence on other devices and the interference from the PDCCH on the A-IoT device, one or more OFDM symbols used for transmitting the first channels may be located at the end of one slot (e.g., the first slot). In other words, the A-IoT device does not expect the received OFDM symbols where the first channels are located to be located at the start or middle part of one slot.

If the first device is the terminal device, the first channel may be transmitted within the uplink carrier and/or the uplink slot. In this case, the network device may schedule, within one slot, Physical Uplink Shared Channel (PUSCH) transmissions of other terminal devices, and the PUSCH needs to occupy consecutive time-domain resources, then, the OFDM symbols for the first device to transmit the first channels may be located at the start and/or end of one slot (e.g., the first slot). In other words, the A-IoT device does not expect the received OFDM symbols where the first channels are located to be located at the middle part of one slot.

In some embodiments, the multiple first channels transmitted by the first device are located within one or more OFDM symbols. The one or more OFDM symbols are: OFDM symbols, other than at least one first OFDM symbol, within the first slot. In other words, the OFDM symbols available for the first device to transmit the first channels are: the OFDM symbols, other than the at least one first OFDM symbol, within the first slot. In the case where the first device is the terminal device, the first slot (used for the first device to transmit the first channels), and the start point and length of the at least one first OFDM symbol are indicated by the network device.

In some embodiments, in the case where the first device is the terminal device, the first slot is indicated through Downlink Control Information (DCI) or a configured grant from the network device, and the start point and length of the at least one first OFDM symbol are indicated through a Radio Resource Control (RRC) configuration parameter from the network device.

For example, the network device may indicate the start point and length of the at least one first OFDM symbol through a symbol start point and length value (*startSymbolAndLength*) configured by the RRC configuration parameter *PUSCH-TimeDomainResourceAllocationList*. It is to be noted that if of the multiple symbol start point and length values are configured by the RRC configuration parameter *PUSCH-TimeDomainResourceAllocationList*, the at least one first OFDM symbol is a union of OFDM symbols indicated by the multiple symbol start point and length values.

For example, it is assumed that the slot for the first device to transmit the first channels that is indicated by the DCI or the configured grant from the network device is the first slot, and one symbol start point and length value is configured by the RRC configuration parameter *PUSCH-TimeDomainResourceAllocationList*: *startSymbolAndLength*=83 (representing that 10 OFDM symbols are occupied starting from an OFDM symbol with an index of 0), then the start point of the at least one first OFDM symbol is the OFDM symbol with the index of 0 (denoted as an OFDM symbol#0) within the first slot and the length is 10 OFDM symbols. That is to say, the at least one first OFDM symbol is: 10 OFDM symbols starting from the OFDM symbol#0 within the first slot. In this case, if the first slot includes 14 OFDM symbols with indices of 0 to 13, respectively, the OFDM symbols available for the first device to transmit the first channels within the first slot are: OFDM symbols with indices of 10, 11, 12, and 13 within the first slot (denoted as an OFDM symbol#10, an OFDM symbol#11, an OFDM symbol#12 and an OFDM symbol#13, respectively).

For example, it is assumed that the slot for the first device to transmit the first channels that is indicated by the DCI or the configured grant from the network device is the first slot, and two symbol start point and length values are configured by the RRC configuration parameter *PUSCH-TimeDomainResourceAllocationList*: *startSymbolAndLength*=55 (representing that 12 OFDM symbols are occupied starting from the OFDM symbol#0), and *startSymbolAndLength*=83 (representing that 10 OFDM symbols are occupied starting from the OFDM symbol#0), then, the at least one first OFDM symbol is a union of: 12 OFDM symbols starting from the OFDM symbol#0 and 10 OFDM symbols starting from the OFDM symbol#0 within the first slot. That is to say, the at least one first OFDM symbol is: 12 OFDM symbols starting from the OFDM symbol#0 within the first slot. In other words, the start point of the at least one first OFDM symbol is the OFDM symbol#0 within the first slot, and has the length is 12 OFDM symbols. In this case, if the first slot includes 14 OFDM symbols with indices of 0 to 13, respectively, the OFDM symbols available for the first device to transmit the first channel within the first slot are: the OFDM symbol#12 and the OFDM symbol#13.

In some embodiments, in the case where the first device is the terminal device, the first slot, and the start point and length of the at least one first OFDM symbol are indicated through the DCI or a configured grant from the network device.

Exemplarily, when the network device allocates, for the first device, time-domain resources for transmitting the first channels, the network device may transmit the DCI or configured grant to the first device. The DCI or the configured grant may indicate a position of the slot (i.e., the first slot) used for transmitting the first channels, and the DCI or configured grant may include a time domain resource assignment bit field that may indicate the start point and the length of the at least one first OFDM symbol.

For example, it is assumed that according to the indication of the time domain resource assignment bit field, the start point of the at least one first OFDM symbol is the OFDM symbol#0 within the first slot and the length is 12 OFDM symbols, i.e., the at least one first OFDM symbol is 12 OFDM symbols starting from the OFDM symbol#0 within the first slot, then, if there are 14 OFDM symbols within the first slot, the one or more OFDM symbols available for the first device to transmit the first channels in the first slot are: the OFDM symbol#12 and the OFDM symbol#13.

In some embodiments, the multiple first channels transmitted by the first device are located within one or more OFDM symbols. The one or more OFDM symbols are: at least one second OFDM symbol within the first slot. In the case where the first device is the terminal device, the first slot, and the start point and length of the at least one second OFDM symbol are indicated by the network device.

In some embodiments, in the case where the first device is the terminal device, the first slot, and the start point and length of the at least one second OFDM symbol are indicated through within DCI or within configured grant from the network device.

Exemplarily, when the network device allocates, for the first device, time-domain resources for transmitting the first channels, the network device may transmit the DCI or configured grant to the first device. The DCI or the configured grant may indicate a position of the slot (i.e., the first slot) used for transmitting the first channels, and the DCI or the configured grant may include a time domain resource assignment bit field that may indicate the start point and the length of the at least one second OFDM symbol.

In an implementation, one or more allowed *startSymbolAndLength* may be configured within the cell, and a value of the time domain resource assignment bit field may correspond to one of the *startSymbolAndLength*s. The start point and the length of the at least one second OFDM symbol may be determined through the *startSymbolAndLength* corresponding to time domain resource assignment bit field.

For example, it is assumed that four allowed *startSymbolAndLength*s are respectively configured within the cell: 0 (representing one OFDM symbol starting from the OFDM symbol#0), 14 (representing two OFDM symbols starting from the OFDM symbol#0), 13 (representing one OFDM symbol starting from the OFDM symbol#13) and 26 (representing two OFDM symbols starting from the OFDM symbol#12), then, the time domain resource assignment bit field may be set to have different values to correspond to the different configurations. For example, when the value of the time domain resource assignment bit field is set to 0, the corresponding *startSymbolAndLength* is 0, when the time domain resource assignment bit field is set to 1, the corresponding *startSymbolAndLength* is 14, when the value of the time domain resource assignment bit field is set to 2, the corresponding *startSymbolAndLength* is 13, and when the value of the time domain resource assignment bit field is set to 3, the corresponding *startSymbolAndLength* is 26.

For example, if *startSymbolAndLength* corresponding to the time domain resource assignment bit field is 0, it represents that the start point of the at least one second OFDM symbol is the OFDM symbol#0 within the first slot, and the length is one OFDM symbol. That is to say, the at least one second OFDM symbol is one OFDM symbol starting from the OFDM symbol#0 within the first slot. Then, if the first slot includes 14 OFDM symbols, the OFDM symbols available for the first device to transmit the first channels within the first slot are: the OFDM symbol#0.

For another example, if *startSymbolAndLength* corresponding to the time domain resource assignment bit field is 1, it represents that the start point of the at least one second OFDM symbol is the OFDM symbol#0 within the first slot, and the length is two OFDM symbols. That is to say, the at least one second OFDM symbol is two OFDM symbols starting from the OFDM symbol#0 within the first slot. Then, if the first slot includes 14 OFDM symbols, the OFDM symbols available for the first device to transmit the first channels within the first slot are: two OFDM symbols starting from the OFDM symbol#0.

In some embodiments, the multiple first channels transmitted by the first device are consecutive in the time domain. In this case, the A-IoT device may determine a time start point of the first channel through the signal of the start of the first channel. In some embodiments, gap(s) may exist between the multiple first channels transmitted by the first device, which facilitates simplification of the complexity of the A-IoT device in determining the time start point of the first channel.

In some embodiments, the multiple first channels are the control channels, a chip length of one of the control channels may be less than a chip length of a data channel associated with the control channel.

In the embodiments of the present disclosure, the chip length refers to the time length of physical symbol carrying one bit of information. The data channel associated with the control channel may also be understood as the data channel indicated by the control channel.

For example, it is assumed that the chip length of the control channel is N, then, N may be less than the chip length M of the data channel associated with the control channel. For example, M may be K times N, K is an integer greater than 1, for example, K may be 2, 4, 8, or the like. For example, the values of N and M may be pre-configured or may be configured by the first device.

According to the method of the present embodiment, the chip length of the control channel may be limited to a relatively small value. Since the chip length is inversely proportional to the bandwidth, i.e., the smaller the chip length, the larger the bandwidth, the method is advantageous to make the frequency resources fully utilized.

In some embodiments, the multiple first channels are the data channels, each of the multiple first channels occupies the same duration, or a part of the multiple first channels occupy different durations.

Herein, each of the multiple first channels occupies a same duration, which may also be understood as: the length (occupied duration) of the first channel is fixed. A part of the multiple first channels occupy different durations, which may be understood as: the length (occupied duration) of the first channel is not fixed or is variable.

In some embodiments, in a case where the part of the multiple first channels occupy different durations, i.e., in the case where the length of the first channel is not fixed or is variable, the A-IoT device receiving a first data channel knows a duration occupied by the first data channel before receiving the first data channel. The first data channel is included in the multiple first channels.

For example, for a certain A-IoT device, the A-IoT device may receive a control channel (e.g., denoted as a first control channel) associated with the first data channel before receiving the first data channel, and the first control channel may indicate a duration occupied by the first data channel. The first data channel is included in the at least one first channel received by the A-IoT device.

In some embodiments, the multiple first channels transmitted by the first device are located within one or more OFDM symbols. In a case where the first channels are the control channels, the multiple first channels are modulated on a first carrier within the one or more OFDM symbols, no carrier other than the first carrier exists within the one or more OFDM symbols. For example, the first device may generate only a first carrier within the one or more OFDM symbols and perform On-Off Keying (OOK) modulation on the first carrier, so as to modulate the multiple first channels on the first carrier.

In a case where the first channels are the data channels, the multiple first channels are modulated on a part of subcarriers within the one or more OFDM symbols. For example, the multiple first channels may be modulated on a part of subcarriers within the one or more OFDM symbols, and other subcarriers, other than the part of subcarriers, may be used for transmitting other channels. In some embodiments, a guard gap exists at both sides of the part of subcarriers.

In some embodiments, the carrier frequency used for the first device to transmit the multiple first channels may be the frequency of the current carrier.

In some embodiments, in the case where the first channels are the control channels, the method further includes: the first device transmits multiple second channels. The multiple second channels occupy different frequency ranges and a same time range (i.e., frequency ranges occupied by the multiple second channels are different and time ranges occupied by the multiple second channels are the same), different second channels among the multiple second channels are received by different A-IoT devices or a same A-IoT device, and the second channels are data channels.

That is to say, after the first device transmits the multiple control channels in the time division manner, the first device may further transmit the multiple data channels in the frequency division manner. In some embodiments, each of the multiple control channels may associate (or indicate) one or more of the multiple data channels.

Correspondingly, for a certain A-IoT device, the A-IoT device may receive at least one second channel from the first device. The at least one second channel may be all or a part of multiple second channels transmitted by the first device, and the multiple second channels occupy different frequency ranges and a same time range. For example, if the first device transmits N second channels, at least one second channel received by the A-IoT device is all or a part of the N second channels. In other words, the all or part of the N second channels are transmitted to the A-IoT device.

It is to be understood that in order to receive the control channel, the A-IoT device needs to continuously perform blind detection, and both the complexity and energy consumption are high. Therefore, in order to reduce the complexity and energy consumption of the A-IoT device receiving the control channel, the first device may transmit multiple control channels in the time division manner. Furthermore, the first device may transmit multiple data channels in the frequency division manner, to increase the system capacity. The system capacity may also be understood as the number of terminal devices (e.g., the A-IoT devices) supported in the system.

In some embodiments, the multiple second channels transmitted by the first device may be transmitted on multiple frequency segments. For example, one second channel may be transmitted on each frequency segment. The multiple frequency segments may be pre-configured or may be configured by the first device. In other words, the division of the multiple frequency segments may be pre-configured or may be configured by the first device. A gap exists or no gap exists between different frequency segments.

In some embodiments, in one frequency segment, the carrier frequency used for transmitting the second channel may be a center frequency of the frequency segment. In this way, interference between the second channels transmitted within adjacent frequency segments can be avoided as much as possible. For example, the first device may transmit the second channels on two frequency segments, which are a frequency segment#1 and a frequency segment#2, respectively. Then, in the frequency segment#1, the carrier frequency used for transmitting the second channel may be the center frequency f₁ of the frequency segment#1, and in the frequency segment#2, the carrier frequency used for transmitting the second channel may be the center frequency f₂ of the frequency segment#2. That is to say, the first device may transmit a total of two second channels in the frequency segment#1 and the frequency segment#2, and the carrier frequencies used for transmitting the two second channels are f₁ and f₂, respectively. A gap exists or no gap exists between the frequency segment#1 and the frequency segment#2.

In some embodiments, the part or all of the multiple second channels transmitted by the first device are transmitted to a first A-IoT device. In this case, the multiple frequency segments used for the first device to transmit the multiple second channels include: a frequency segment used by the first A-IoT device by default for channel reception, and/or a frequency segment reported by the first A-IoT device. The frequency segment(s) reported by the first A-IoT device includes: all or part of frequency segments available for the channel reception by the first A-IoT device.

For example, the multiple frequency segments used for the first device to transmit the multiple second channels include: a frequency segment used by the first A-IoT device by default for the channel reception. That is to say, the first device may transmit the second channels to the first A-IoT device within the frequency segment that is used by the first A-IoT device by default for the channel reception.

In a possible case, the first A-IoT device may support one frequency segment, then, the frequency segment is the frequency segment used by the first A-IoT device by default for the channel reception. In another possible case, the first A-IoT device may support multiple frequency segments, and at least one of the multiple frequency segments is the frequency segment used by the first A-IoT device by default for the channel reception. Herein, the frequency segment supported by the first A-IoT device may also be understood as a frequency segment available for the channel reception by the first A-IoT device.

For another example, the multiple frequency segments used for the first device to transmit the multiple second channels include: the frequency segment reported by the first A-IoT device. That is to say, the first device may transmit the second channels to the first A-IoT device within the frequency segment reported by the first A-IoT device.

The frequency segment reported by the first A-IoT device includes: all or part of frequency segments available for the channel reception by the first A-IoT device. For example, the frequency segments available for the channel reception by the first A-IoT device include M frequency segments, then, the first A-IoT device may report, to the first device, all or a part of the M frequency segments, so that the first device may transmit the second channels to the first A-IoT device within the all or the part of the frequency segments.

For another example, the multiple frequency segments used for the first device to transmit the multiple second channels include: the frequency segment used by the first A-IoT device by default for channel reception, and the frequency segment reported by the first A-IoT device.

In some embodiments, if a certain frequency segment does not belong to the frequency segments used by the first A-IoT device by default for the channel reception, then, after the first A-IoT device reports the frequency segment, the first device may transmit the second channel, to the first A-IoT device, by using the frequency segment.

Correspondingly, for a certain A-IoT device (e.g., the first A-IoT device), the at least one frequency segment used for receiving the at least one second channel may include: a frequency segment used by the A-IoT device by default for channel reception, and/or a frequency segment reported by the A-IoT device. The frequency segment reported by the A-IoT device includes: all or part of frequency segments available for the channel reception by the A-IoT device.

In some embodiments, the multiple second channels transmitted by the first device may be transmitted on multiple carrier frequencies. For example, one second channel may be transmitted on each carrier frequency. The multiple carrier frequencies may be pre-configured or may be configured by the first device. In other words, the carrier frequencies available for the second channels may be pre-configured or may be configured by the first device.

In some embodiments, the part or all of the multiple second channels transmitted by the first device are transmitted to a first A-IoT device. In this case, the multiple carrier frequencies (used for the first device to transmit the second channels) include: a carrier frequency used by the first A-IoT device by default for channel reception, and/or a carrier frequency reported by the first A-IoT device. The carrier frequency reported by the first A-IoT device includes: all or part of carrier frequencies available for the channel reception by the first A-IoT device.

For example, the multiple carrier frequencies used for the first device to transmit the multiple second channels include: a carrier frequency used by the first A-IoT device by default for the channel reception. That is to say, the first device may transmit the second channels to the first A-IoT device on a carrier frequency that is used by the first A-IoT device by default for the channel reception.

In a possible case, the first A-IoT device may support one carrier frequency, then, the carrier frequency is the carrier frequency used by the first A-IoT device by default for the channel reception. In another possible case, the first A-IoT device may support multiple carrier frequencies, and at least one of the multiple carrier frequencies is the carrier frequency used by the first A-IoT device by default for the channel reception. Herein, the carrier frequency supported by the first A-IoT device may also be understood as a carrier frequency available for the channel reception by the first A-IoT device.

For another example, the multiple carrier frequencies used for the first device to transmit the second channels include: the carrier frequency reported by the first A-IoT device. That is to say, the first device may transmit the second channels to the first A-IoT device on the carrier frequency reported by the first A-IoT device.

The carrier frequency reported by the first A-IoT device includes: all or part of carrier frequencies available for the channel reception by the first A-IoT device. For example, the carrier frequencies available for the channel reception by the first A-IoT device include M carrier frequencies, then, the first A-IoT device may report, to the first device, all or a part of the M carrier frequencies, so that the first device may transmit the second channels to the first A-IoT device on the all or the part of the carrier frequencies.

For another example, the multiple carrier frequencies used for the first device to transmit the second channels include: the carrier frequency used by the first A-IoT device by default for channel reception, and the carrier frequency reported by the first A-IoT device.

In some embodiments, if a certain carrier frequency does not belong to the carrier frequencies used by the first A-IoT device by default for the channel reception, then, after the first A-IoT device reports the carrier frequency, the first device may transmit the second channel, to the first A-IoT device, by using the carrier frequency.

Correspondingly, for a certain A-IoT device (e.g., the first A-IoT device), the at least one carrier frequency used for receiving the at least one second channel may include: the carrier frequency used by the A-IoT device by default for channel reception, and/or the carrier frequency reported by the A-IoT device. The carrier frequency reported by the A-IoT device includes: all or part of carrier frequencies available for the channel reception by the A-IoT device.

In some embodiments, the bandwidth for the first device to transmit the multiple second channels may be a preconfigured first bandwidth or may be a predefined (e.g., defined in the protocol) first bandwidth. Alternatively, the bandwidth used for the first device to transmit each second channel may be a preconfigured first bandwidth or a predefined first bandwidth. Alternatively, the bandwidth of the second channel transmitted by the first device on each carrier frequency may be a preconfigured first bandwidth or predefined first bandwidth. The first bandwidth may be less than the carrier bandwidth, and of the multiple carrier frequencies for the first device to transmit the second channels may be included in a frequency range corresponding to the carrier bandwidth.

In some embodiments, the multiple second channels transmitted by the first device are transmitted on multiple carrier groups. Each carrier group is used for transmitting one second channel. each carrier group includes one or more subcarriers, and for example, frequency-domain gap(s) between different carrier groups may be greater than a certain particular value.

Correspondingly, for a certain A-IoT device, the A-IoT device may receive, on at least one carrier group, at least one second channel from the first device.

In some embodiments, the multiple carrier groups include a first subcarrier. A frequency of the first subcarrier is related to following parameters: a frequency reference point (denoted as *f*₀); an index of a carrier group where the first subcarrier is located (denoted as m); and a reference subcarrier spacing (denoted as Δ*f*). For example, *f*₀ may be the lowest frequency position of the current carrier bandwidth, or may be the center frequency position of the current carrier bandwidth.

For example, it is assumed that each carrier group includes one subcarrier, then, the frequency *f* of the first subcarrier may be calculated through the following formula:*f* = *f*₀ + *m* × *K* × Δ*f*. Where K is a fixed value, e.g. *K*=A×12, for example, a value of A may be pre-defined (e.g. defined in the protocol), may be pre-configured or may be configured by the network device, and a value of *K* may be used for meeting the minimum gap between different carrier groups.

In some embodiments, in a case where the first device is the terminal device, the multiple carrier groups are indicated through the DCI or the configured grant from the network device.

In some embodiments, the multiple first channels transmitted by the first device include a first control channel, the first control channel is associated with at least one of the multiple second channels (data channels) transmitted by the first device, and the at least one of the multiple second channels is transmitted on at least one of the multiple carrier groups. The first control channel carries an index of the at least one carrier group. That is to say, for a certain control channel (e.g., the first control channel), the control channel may carry the index of the carrier group used for transmitting the at least one data channel associated with the control channel.

Correspondingly, for a certain A-IoT device, the at least one carrier group used for the A-IoT device to receive at least one second channel (data channel) may be indicated through at least one first channel (control channel) received by the A-IoT device. For example, before receiving a certain second channel, the A-IoT device may know, according to an indication of the first channel associated with the second channel, the carrier group used by the first device when transmitting the second channel; and furthermore, the A-IoT device may receive the second channel on the carrier group.

In some embodiments, before the first device transmits the multiple second channels, the method may further include: the first device transmits first indication information (e.g., the higher-layer signaling) to a first A-IoT device. The first indication information is used for indicating an index of at least one carrier group, the index of the at least one carrier group is used for the first A-IoT device to receive the second channel on the at least one carrier group, and the at least one carrier group is included in the multiple carrier groups.

That is to say, for a certain A-IoT device, the at least one carrier group used for the A-IoT device to receive at least one second channel may be indicated through the first indication information (e.g., the higher-layer signaling) from the first device. For example, after receiving the first indication information from the first device, the A-IoT device may receive, according to the index of the at least one carrier group indicated by the first indication information, the second channel from the first device on the at least one carrier group.

The method in the embodiment clarifies the problem of how the first device transmits the control channels/data channels to the A-IoT device in the A-IoT. Herein, the first device may transmit the multiple first channels in the time division manner, so as to reduce the complexity and energy consumption of the A-IoT device receiving the first channel, and the first channel may be a control channel or a data channel. Furthermore, in the case where the first channel is the control channel, the first device may also transmit multiple data channels in the frequency division manner, so as to increase the system capacity.

The present disclosure further provides a communication method. In the method, the first device may transmit multiple first channels (the first channels are control channels or data channels). The multiple first channels occupy different frequency ranges and a same time range. Different first channels among the multiple first channels may be received by different A-IoT devices or a same A-IoT device. That is to say, the first device may transmit the control channels or the data channels to the at least one A-IoT device in a frequency division manner.

FIG. 9 is a second schematic flowchart of a communication method according to an embodiment of the present disclosure. As shown in FIG. 9, the method may include a following operation S901.

In S901, a first device transmits multiple first channels, where the multiple first channels occupy different frequency ranges and a same time range, different first channels among the multiple first channels are received by different A-IoT devices or a same A-IoT device, and the first channels are control channels or data channels.

In the embodiments of the present disclosure, the first device may transmit multiple first channels. The multiple first channels occupy different frequency ranges and a same time range (i.e., frequency ranges occupied by the multiple first channels are different and time ranges occupied by the multiple first channels are the same). Herein, different first channels among the multiple first channels may be received by different A-IoT devices or the same A-IoT device. That is to say, the first device may transmit the multiple first channels in a frequency division manner, and different first channels among the multiple first channels may be received by different A-IoT devices or the same A-IoT device.

For example, it is assumed that the multiple first channels transmitted by the first device include a first channel#1 and a first channel#2, the first channel#1 and the first channel#2 may be received by different A-IoT devices, i.e., the first channel#1 and the first channel#2 are transmitted to different A-IoT devices. Alternatively, the first channel#1 and the first channel#2 may be received by the same A-IoT device, i.e., the first channel#1 and the first channel#2 are transmitted to the same A-IoT device.

Correspondingly, for a certain A-IoT device, the A-IoT device may receive at least one first channel from the first device, the at least one first channel may be all or a part of multiple first channels transmitted by the first device, and the multiple first channels occupy different frequency ranges and the same time range. For example, if the first device transmits N first channels, at least one first channel received by the A-IoT device is all or a part of the N first channels. In other words, the all or part of the N first channels are transmitted to the A-IoT device.

In some embodiments, the first device may be the network device (e.g., the network device in FIG. 6) or the terminal device (e.g., the intermediate node in FIG. 7). In a case where the first device is the network device, the first device may transmit the first channels within a downlink carrier and/or a downlink slot. In a case where the first device is the terminal device, the first device may transmit the first channels within an uplink carrier and/or an uplink slot. In some scenarios, the first device may also be referred to as the interrogator node.

In some embodiments, the multiple first channels transmitted by the first device may be transmitted on multiple frequency segments. For example, one first channel may be transmitted on each frequency segment. The multiple frequency segments may be pre-configured or may be configured by the first device. In other words, the division of the multiple frequency segments may be pre-configured or may be configured by the first device. A gap exists or no gap exists between different frequency segments.

In some embodiments, in one frequency segment, the carrier frequency used for transmitting the first channel may be a center frequency of the frequency segment. In this way, interference between the first channels transmitted within adjacent frequency segments can be avoided as much as possible. For example, the first device may transmit the first channels on two frequency segments, which are a frequency segment#1 and a frequency segment#2, respectively. Then, in the frequency segment#1, the carrier frequency used for transmitting the first channel may be the center frequency f₁ of the frequency segment#1, and in the frequency segment#2, the carrier frequency used for transmitting the first channel may be the center frequency f₂ of the frequency segment#2. That is to say, the first device may transmit a total of two first channels in the frequency segment#1 and the frequency segment#2, and the carrier frequencies used for transmitting the two first channels are f₁ and f₂, respectively. A gap exists or no gap exists between the frequency segment#1 and the frequency segment#2.

In some embodiments, the part or all of the multiple first channels transmitted by the first device are transmitted to a first A-IoT device. In this case, the multiple frequency segments used for the first device to transmit the multiple first channels include: a frequency segment used by the first A-IoT device by default for channel reception, and/or a frequency segment reported by the first A-IoT device. The frequency segment reported by the first A-IoT device includes: all or part of frequency segments available for the channel reception by the first A-IoT device.

For example, the multiple frequency segments used for the first device to transmit the multiple first channels include: a frequency segment used by the first A-IoT device by default for the channel reception. That is to say, the first device may transmit the first channels to the first A-IoT device within the frequency segment that is used by the first A-IoT device by default for the channel reception.

In a possible case, the first A-IoT device may support one frequency segment, then, the frequency segment is the frequency segment used by the first A-IoT device by default for the channel reception. In another possible case, the first A-IoT device may support multiple frequency segments, and at least one of the multiple frequency segments is the frequency segment used by the first A-IoT device by default for the channel reception. Herein, the frequency segment supported by the first A-IoT device may also be understood as a frequency segment available for the channel reception by the first A-IoT device.

For another example, the multiple frequency segments used for the first device to transmit the multiple first channels include: the frequency segment reported by the first A-IoT device. That is to say, the first device may transmit the first channel(s) to the first A-IoT device within the frequency segment reported by the first A-IoT device.

The frequency segment reported by the first A-IoT device includes: all or part of frequency segments available for the channel reception by the first A-IoT device. For example, the frequency segments available for the channel reception by the first A-IoT device include M frequency segments, then, the first A-IoT device may report, to the first device, all or a part of the M frequency segments, so that the first device may transmit the first channels to the first A-IoT device within the all or the part of the frequency segments.

For another example, the multiple frequency segments used for the first device to transmit the multiple first channels include: the frequency segment used by the first A-IoT device by default for channel reception, and the frequency segment reported by the first A-IoT device.

In some embodiments, if a certain frequency segment does not belong to the frequency segments used by the first A-IoT device by default for the channel reception, then, after the first A-IoT device reports the frequency segment, the first device may transmit the first channel, to the first A-IoT device, by using the frequency segment.

Correspondingly, for a certain A-IoT device (e.g., the first A-IoT device), the at least one frequency segment used for receiving the at least one first channel may include: a frequency segment used by the A-IoT device by default for channel reception, and/or a frequency segment reported by the A-IoT device. The frequency segment reported by the A-IoT device include: all or part of frequency segments available for the channel reception by the A-IoT device.

In some embodiments, the multiple first channels transmitted by the first device may be transmitted on multiple carrier frequencies. For example, one first channel may be transmitted on each carrier frequency. The multiple carrier frequencies may be pre-configured or may be configured by the first device. In other words, the carrier frequencies available for the first channels may be pre-configured or may be configured by the first device.

In some embodiments, the part or all of the multiple first channels transmitted by the first device are transmitted to a first A-IoT device. In this case, the multiple carrier frequencies (used for the first device to transmit the first channels) include: a carrier frequency used by the first A-IoT device by default for channel reception, and/or a carrier frequency reported by the first A-IoT device. The carrier frequency reported by the first A-IoT device includes: all or part of carrier frequencies available for the channel reception by the first A-IoT device.

For example, the multiple carrier frequencies used for the first device to transmit the multiple first channels include: a carrier frequency used by the first A-IoT device by default for the channel reception. That is to say, the first device may transmit the first channels to the first A-IoT device on a carrier frequency that is used by the first A-IoT device by default for the channel reception.

In a possible case, the first A-IoT device may support one carrier frequency, then, the carrier frequency is the carrier frequency used by the first A-IoT device by default for the channel reception. In another possible case, the first A-IoT device may support multiple carrier frequencies, and at least one of the multiple carrier frequencies is the carrier frequency used by the first A-IoT device by default for the channel reception. Herein, the carrier frequency supported by the first A-IoT device may also be understood as a carrier frequency available for the channel reception by the first A-IoT device.

For another example, the multiple carrier frequencies used for the first device to transmit the first channels include: the carrier frequency reported by the first A-IoT device. That is to say, the first device may transmit the first channels to the first A-IoT device on the carrier frequency reported by the first A-IoT device.

The carrier frequency reported by the first A-IoT device includes: all or part of carrier frequencies available for the channel reception by the first A-IoT device. For example, the carrier frequencies available for the channel reception by the first A-IoT device include M carrier frequencies, then, the first A-IoT device may report, to the first device, all or a part of the M carrier frequencies, so that the first device may transmit the first channels to the first A-IoT device on the all or the part of the carrier frequencies.

For another example, the multiple carrier frequencies used for the first device to transmit the first channels include: the carrier frequency used by the first A-IoT device by default for channel reception, and the carrier frequency reported by the first A-IoT device.

In some embodiments, if a certain carrier frequency does not belong to the carrier frequencies used by the first A-IoT device by default for the channel reception, then, after the first A-IoT device reports the carrier frequency, the first device may transmit the first channel, to the first A-IoT device, by using the carrier frequency.

Correspondingly, for a certain A-IoT device (e.g., the first A-IoT device), the at least one carrier frequency used for receiving the at least one first channel may include: the carrier frequency used by the A-IoT device by default for channel reception, and/or the carrier frequency reported by the A-IoT device. The carrier frequency reported by the A-IoT device includes: all or part of carrier frequencies available for the channel reception by the A-IoT device.

In some embodiments, the bandwidth for the first device to transmit the multiple first channels may be a preconfigured first bandwidth or may be a predefined (e.g., defined in the protocol) first bandwidth. Alternatively, the bandwidth used for the first device to transmit each first channel may be a preconfigured first bandwidth or a predefined first bandwidth. Alternatively, the bandwidth of the first channel transmitted by the first device on each carrier frequency may be a preconfigured first bandwidth or predefined first bandwidth. The first bandwidth may be less than the carrier bandwidth, and multiple carrier frequencies for the first device to transmit the first channels may be included in a frequency range corresponding to the carrier bandwidth.

According to the method of the present embodiment, the first device may transmit multiple first channels in a frequency division manner, thereby facilitating increasing the system capacity.

In some embodiments, in the case where the first channels are the control channels, the method further includes: the first device transmits multiple second channels on multiple carrier groups within a same time range. Each of the multiple carrier groups is used for transmitting one of the multiple second channel. Each carrier group includes one or more subcarriers, and for example, frequency-domain gap(s) between different carrier groups may be greater than a certain particular value. Different second channels among the multiple second channels are received by different A-IoT devices or the same A-IoT device, and the second channels are data channels.

That is to say, after the first device transmits the multiple control channels in the frequency division manner, the first device may further transmit the multiple data channels in the frequency division manner. The multiple control channels may be transmitted on multiple frequency segments/carrier frequencies, and the multiple data channels may be transmitted on multiple carrier groups. In some embodiments, each of the multiple control channels may associate (or indicate) one or more of the multiple data channels.

Correspondingly, for a certain A-IoT device, the A-IoT device may receive, on at least one carrier group, at least one second channel from the first device. The at least one second channel may be all or a part of multiple second channels transmitted by the first device, and the multiple second channels occupy different frequency ranges and the same time range. For example, if the first device transmits N second channels, at least one second channel received by the A-IoT device is all or a part of the N second channels. In other words, the all or part of the N second channels are transmitted to the A-IoT device.

In some embodiments, the bandwidth occupied by one control channel may be greater than the bandwidth occupied by one data channel.

It is to be understood that in order to receive the control channel, the A-IoT device needs to continuously perform blind detection, and both the complexity and energy consumption are high. Therefore, in order to reduce the complexity and energy consumption of the A-IoT device receiving the control channel, the first device may transmit the control channels by using a larger bandwidth. In this way, the A-IoT device may receive, by using the filter with the poor performance, the control channel from the first device, thereby facilitating reducing the complexity and energy consumption of the A-IoT device receiving the control channel. Furthermore, the first device may transmit the data channels by using a less bandwidth, so as to increase the system capacity.

In some embodiments, the multiple carrier groups (used for the first device to transmit the second channels) include a first subcarrier. A frequency of the first subcarrier is related to following parameters: a frequency reference point (denoted as *f*₀); an index of a carrier group where the first subcarrier is located (denoted as m); and a reference subcarrier spacing (denoted as Δ*f*). For example, *f*₀ may be the lowest frequency position of the current carrier bandwidth, or may be the center frequency position of the current carrier bandwidth.

For example, it is assumed that each carrier group includes one subcarrier, then, the frequency *f* of the first subcarrier may be calculated through the following formula:*f* = *f*₀ + *m* × *K* × Δ*f*. Where *K* is a fixed value, e.g. *K* =A×12, for example, a value of A may be pre-defined (e.g. defined in the protocol), may be pre-configured or may be configured by the network device, and a value of K may be used for meeting the minimum gap between different carrier groups.

In some embodiments, in a case where the first device is the terminal device, the multiple carrier groups are indicated through the DCI or the configured grant from the network device.

In some embodiments, the multiple first channels transmitted by the first device include a first control channel, the first control channel is associated with at least one of the multiple second channels (data channels) transmitted by the first device, and the at least one of the multiple second channels is transmitted on at least one of the multiple carrier groups. The first control channel carries an index of the at least one carrier group. That is to say, for a certain control channel (e.g., the first control channel), the control channel may carry the index of the carrier group used for transmitting the at least one data channel associated with the control channel.

Correspondingly, for a certain A-IoT device, the at least one carrier group used for the A-IoT device to receive at least one second channel (data channel) may be indicated through at least one first channel (control channel) received by the A-IoT device. For example, before receiving a certain second channel, the A-IoT device may know, according to an indication of the first channel associated with the second channel, the carrier group used by the first device when transmitting the second channel; and furthermore, the A-IoT device may receive the second channel on the carrier group.

In some embodiments, before the first device transmits the multiple second channels on the multiple carrier groups within the same time range, the method may further include: the first device transmits first indication information (e.g., the higher-layer signaling) to a first A-IoT device. The first indication information is used for indicating an index of at least one carrier group, the index of the at least one carrier group is used for the first A-IoT device to receive the second channel on the at least one carrier group, and the at least one carrier group is included in the multiple carrier groups.

That is to say, for a certain A-IoT device, the at least one carrier group used for the A-IoT device to receive at least one second channel may be indicated through the first indication information (e.g., the higher-layer signaling) from the first device. For example, after receiving the first indication information from the first device, the A-IoT device may receive, according to the index of the at least one carrier group indicated by the first indication information, the second channel from the first device on the at least one carrier group.

In some embodiments, the multiple first channels (control channels/ data channels) transmitted by the first device are transmitted on multiple first carrier groups. Each first carrier group is used for transmitting one first channel. Each first carrier group includes one or more subcarriers, and for example, frequency-domain gap(s) between different first carrier groups may be greater than a certain particular value.

Correspondingly, for a certain A-IoT device, the A-IoT device may receive, on at least one first carrier group, at least one first channel from the first device. In some embodiments, at least one first carrier group for the A-IoT device to receive the at least one first channel may be indicated by the first device.

In some embodiments, the multiple first carrier groups include a first subcarrier, a frequency of the first subcarrier is related to following parameters: a first frequency reference point (denoted as *f*_{0,1}); an index of a first carrier group where the first subcarrier is located (denoted as *m*₁); and a first reference subcarrier spacing (denoted as Δ*f*₁).

For example, it is assumed that each first carrier group includes one subcarrier, then, the frequency *f*₁ of the first subcarrier may be calculated through the following formula: *f*₁ = *f*_{0,1} + *m*₁ × *K*₁ × Δ*f*₁. Where *K*₁ is a fixed value, e.g. *K*₁=A×12, for example, a value of A may be pre-defined (e.g. defined in the protocol), may be pre-configured or may be configured by the network device, and a value of *K*₁ may be used for meeting the minimum gap between different first carrier groups.

In some embodiments, in a case where the first device is the terminal device, the multiple first carrier groups are indicated through the DCI or the configured grant from the network device.

In some embodiments, in the case where the first channels are the control channels, the method further includes: the first device transmits multiple second channels on multiple second carrier groups within the same time range. Each of the multiple second carrier groups is used for transmitting one of the multiple second channel. Each second carrier group includes one or more subcarriers, and for example, frequency-domain gap(s) between different second carrier groups may be greater than a certain particular value. Different second channels among the multiple second channels are received by different A-IoT devices or the same A-IoT device, and the second channels are data channels.

That is to say, after the first device transmits the multiple control channels on the multiple first carrier groups, the first device may further transmit the multiple data channels on the multiple second carrier groups. In some embodiments, each of the multiple control channels may associate (or indicate) one or more of the multiple data channels. The channel transmission is performed on a carrier group, which can make the transmitted channel occupy a relatively small bandwidth, therefore, this method is advantageous for increasing the system capacity.

Correspondingly, for a certain A-IoT device, the A-IoT device may receive, on at least one second carrier group, at least one second channel from the first device, the at least one second channel may be all or a part of multiple second channels transmitted by the first device, and the multiple second channels occupy different frequency ranges and the same time range. For example, if the first device transmits N second channels, at least one second channel received by the A-IoT device is all or a part of the N second channels. In other words, the all or part of the N second channels are transmitted to the A-IoT device.

In some embodiments, the multiple second carrier groups include a second subcarrier. A frequency of the second subcarrier is related to following parameters: a second frequency reference point (denoted as *f*_{0,2}); an index of a second carrier group where the first subcarrier is located (denoted as *m*₂); and a second reference subcarrier spacing (denoted as Δ*f*₂).

For example, it is assumed that each second carrier group includes one subcarrier, then, the frequency *f*₂ of the second subcarrier may be calculated through the following formula: *f*₂ = *f*_{0,2} + *m*₂ × *K*₂ × Δ*f*₂. Where *K*₂ is a fixed value, e.g. *K*₂=A×12, for example, a value of A may be pre-defined (e.g. defined in the protocol), may be pre-configured or may be configured by the network device, and a value of *K*₂ may be used for meeting the minimum gap between different second carrier groups.

In some embodiments, in a case where the first device is the terminal device, the multiple second carrier groups are indicated through the DCI or the configured grant from the network device.

In some embodiments, the multiple first channels transmitted by the first device include a first control channel, the first control channel is associated with at least one of the multiple second channels (data channels) transmitted by the first device, and the at least one of the multiple second channels is transmitted on at least one of the multiple second carrier groups. The first control channel carries an index of the at least one second carrier group. That is to say, for a certain control channel (e.g., the first control channel), the control channel may carry the index of the second carrier group used for transmitting the at least one data channel associated with the control channel.

Correspondingly, for a certain A-IoT device, the at least one second carrier group used for the A-IoT device to receive at least one second channel may be indicated through at least one first channel received by the A-IoT device. For example, before receiving a certain second channel, the A-IoT device may know, according to an indication of the first channel associated with the second channel, the second carrier group used by the first device when transmitting the second channel; and furthermore, the A-IoT device may receive the second channel on the second carrier group.

In some embodiments, before the first device transmits the multiple second channels on the multiple second carrier groups within the same time range, the method may further include: the first device transmits first indication information (e.g., the higher-layer signaling) to a first A-IoT device. The first indication information is used for indicating an index of at least one second carrier group, the index of the at least one second carrier group is used for the first A-IoT device to receive the second channel on the at least one second carrier group, and the at least one second carrier group is included in the multiple second carrier groups.

That is to say, for a certain A-IoT device, the at least one second carrier group used for the A-IoT device to receive at least one second channel may be indicated through the first indication information (e.g., the higher-layer signaling) from the first device. For example, after receiving the first indication information from the first device, the A-IoT device may receive, according to the index of the at least one second carrier group indicated by the first indication information, the second channel from the first device on the at least one second carrier group.

In some embodiments, the multiple first channels transmitted by the first device include a first control channel, the first control channel is associated with at least one of the multiple second channels (data channels) transmitted by the first device. A chip length of the first control channel may be less than a chip length of the at least one second channel. Alternatively, the chip length of the first control channel may be less than the chip length of each of the at least one second channel. Alternatively, the chip length of the first control channel may be less than the chip length of the data channel associated with the first control channel.

In some embodiments, the multiple first channels transmitted by the first device are located within one or more OFDM symbols.

For example, the multiple first channels may be located within one OFDM. In this case, the duration occupied by one first channel may be less than the length of one OFDM symbol. For another example, the multiple first channels may be located within multiple OFDMs. In this case, the duration occupied by one first channel may be greater than, less than, or equal to the length of one OFDM symbol.

In some embodiments, in a case where the first device is the network device, the one or more OFDM symbols are located at an end of one slot (e.g., the first slot). In a case where the first device is the terminal device, the one or more OFDM symbols are located at a start and/or an end of one slot.

It is to be understood that if the first device is the network device, the first channel may be transmitted within a downlink carrier and/or a downlink slot. In this case, since the start of one slot may be configured with a common control channel transmission resource of a cell, the common control channel transmission resource may be used for performing the transmission of a PDCCH, in order to avoid interference from the PDCCH on the A-IoT device, the first channels should not be transmitted on an OFDM symbol on which the common control channel transmission resource of the cell exists, i.e., the start of one slot is not used for transmitting the first channels. In addition, the network device may also transmit, within one slot, the PDSCH to other devices other than the A-IoT device, and the time-domain resources occupied by the PDSCH are consecutive. Therefore, in order to avoid both the influence on other devices and the interference from the PDCCH on the A-IoT device, one or more OFDM symbols used for transmitting the first channels may be located at the end of one slot (e.g., the first slot). In other words, the A-IoT device does not expect the received OFDM symbol where the first channels are located to be located at the start or middle part of one slot.

If the first device is the terminal device, the first channel may be transmitted within the uplink carrier and/or the uplink slot. In this case, the network device may schedule, within one slot, PUSCH transmissions of other terminal devices, and the PUSCH needs to occupy consecutive time-domain resources, then, the OFDM symbols for the first device to transmit the first channels may be located at the start and/or end of one slot (e.g., the first slot). In other words, the A-IoT device does not expect the received OFDM symbol where the first channels are located to be located at the middle part of one slot.

In some embodiments, the multiple first channels transmitted by the first device are located within one or more OFDM symbols. The one or more OFDM symbols are: OFDM symbols, other than at least one first OFDM symbol, within the first slot. In other words, the OFDM symbols available for the first device to transmit the first channels are: OFDM symbols, other than at least one first OFDM symbol, within the first slot. In the case where the first device is the terminal device, the first slot (used for the first device to transmit the first channels), and the start point and length of the at least one first OFDM symbol are indicated by the network device.

In some embodiments, in the case where the first device is the terminal device, the first slot is indicated through the DCI or the configured grant from the network device, and the start point and the length of the at least one first OFDM symbol are indicated through the RRC configuration parameter from the network device.

Herein, the indication manner where the first slot is indicated through the DCI or the configured grant from the network device and the indication manner where the start point and the length of the at least one first OFDM symbol are indicated through the RRC configuration parameter from the network device may refer to the related description in operation S801, which will not be repeated herein.

In some embodiments, in the case where the first device is the terminal device, the first slot, and the start point and length of the at least one first OFDM symbol are indicated through DCI or a configured grant from the network device.

Herein, the indication manner where the first slot, the start point and the length of the at least one first OFDM symbol are indicated through the DCI or the configured grant from the network device may refer to the related description in operation S801, which will not be repeated herein.

In some embodiments, the multiple first channels transmitted by the first device are located within one or more OFDM symbols. The one or more OFDM symbols are: at least one second OFDM symbol within the first slot. In the case where the first device is the terminal device, the first slot, and the start point and length of the at least one second OFDM symbol are indicated by the network device.

In some embodiments, in the case where the first device is the terminal device, the first slot, and the start point and length of the at least one second OFDM symbol are indicated through the DCI or the configured grant from the network device.

Herein, the indication manner where the first slot, the start point and the length of the at least one second OFDM symbol are indicated through the DCI or the configured grant from the network device may refer to the related description in operation S801, which will not be repeated herein.

In some embodiments, the multiple first channels transmitted by the first device are located within one or more OFDM symbols. In a case where the first channels are the control channels, the multiple first channels are modulated on a first carrier within the one or more OFDM symbols, no carrier other than the first carrier exists within the one or more OFDM symbols. For example, the first device may generate only a first carrier within the one or more OFDM symbols and perform the OOK modulation on the first carrier, so as to modulate the multiple first channels on the first carrier.

In a case where the first channels are the data channels, the multiple first channels are modulated on a part of subcarriers within the one or more OFDM symbols. For example, the multiple first channels may be modulated on a part of subcarriers within the one or more OFDM symbols, and other subcarriers, other than the part of subcarriers, may be used for transmitting other channels. In some embodiments, a guard gap exists at both sides of the part of subcarriers.

The method in the embodiments clarifies the problem of how the first device transmits the control channels/data channels to the A-IoT device in the A-IoT. Herein, the first device may transmit multiple first channels in the frequency division manner, so as to increase the system capacity.

Furthermore, in the case where the first channel is the control channel, the first device may further transmit multiple second channels in the frequency division manner. In an implementation, the multiple control channels may be transmitted on multiple frequency segments/carrier frequencies, and the multiple data channels may be transmitted on multiple carrier groups. The bandwidth occupied by one control channel may be greater than the bandwidth occupied by one data channel. In this way, the A-IoT device may receive, by using the filter with poor performance, the control channel from the first device, thereby facilitating reducing the complexity and energy consumption of the A-IoT device receiving the control channel. In addition, the first device may transmit the data channels through using a less bandwidth, which facilitates increasing the system capacity. In another implementation, the multiple control channels may be transmitted on multiple first carrier groups, and the multiple data channels may be transmitted on multiple second carrier groups. The channel transmission is performed on a carrier group, which can make the transmitted channel occupy a relatively small bandwidth, therefore, this method is advantageous for increasing the system capacity.

The communication method provided by the embodiments of the present disclosure is described in the foregoing. In order to facilitate understanding of the embodiments of the present disclosure, possible implementation solutions of the communication method applicable to the embodiments of the present disclosure will be described below with reference to examples.

In the embodiments of the present disclosure, a network device (e.g., a network device in FIG. 6) or an intermediate device (e.g., an intermediate node in FIG. 7) may be collectively referred to as an interrogator node, and the intermediate node may be a terminal device. When the interrogator node communicates with the A-IoT device, the interrogator node needs to transmit the data channels and/or the control channels to the A-IoT device.

The control channel (e.g., a downlink control channel used for indicating downlink transmission or scheduling uplink transmission) may carry control information, and the data channel may carry data information. In the embodiments of the present disclosure, the control channel may be a fixed channel, and the data channel may be a fixed channel or a variable channel. The fixed channel and the variable channel may be collectively referred to as an A-IoT channel.

Exemplarily, the fixed channel refers to a channel on which the A-IoT device is able to perform reception and decoding without relying on dynamic indication information. The fixed channel may include a specific signal. For example, in a case where the fixed channel is the control channel, the fixed channel at least includes a synchronization signal part and a control information part; and in a case where the fixed channel is the data channel, the fixed channel at least includes a synchronization signal part and a data information part.

FIG. 10 is an example diagram of a fixed channel according to an embodiment of the present disclosure. As shown in FIG. 10, the fixed channel includes two parts, one part is a synchronization signal part and the other part is a control/data part. In some scenarios, symbols carrying other information may also exist between the two parts.

Exemplarily, the variable channel refers to a channel on which one or more of the length, the waveform, the coding scheme, the coding efficiency, the modulation scheme, and the like, are variable, and the A-IoT device needs to correctly receive and decode the variable channel according to a dynamic indication. For example, the variable channel may be a data channel with the variable length that is indicated by the control channel. The variable channel may include a specific signal. For example, variable channel may include at least two parts, one part is the synchronization signal part and the other part is the data information part. In some scenarios, symbols carrying other information may also exist between the two parts.

In some embodiments, in order to flexibly transmit the fixed channel and the variable channel, different waveforms and modulation schemes may be adopted for the fixed channel and the variable channel.

Exemplarily, a separately generated OOK waveform may be adopted for the fixed channel, i.e. the interrogator node may generate only a carrier used for transmitting the A-IoT channel (corresponding to the first carrier in the aforementioned embodiment) within the transmission duration of the fixed channel, and perform the OOK modulation on the carrier, thereby modulating the fixed channel on the carrier.

Exemplarily, a jointly generated OOK waveform may be adopted for the variable channel, i.e., the interrogator node may transmit one or more OFDM symbols within the transmission duration of the variable channel. The variable channel is modulated on a part of subcarriers within the one or more OFDM symbols, and other subcarriers, other than the part of subcarriers, may be used for transmitting other channels. In some embodiments, a guard gap exists at both sides of the part of subcarriers.

In some embodiments, the A-IoT channel may be transmitted within a downlink carrier and/or a downlink slot. In this case, since the start of one slot may be configured with a common control channel transmission resource of a cell, the common control channel transmission resource may be used for performing the transmission of a PDCCH, in order to avoid interference from the PDCCH on the A-IoT channel receiving terminal (e.g., the A-IoT device), the A-IoT channels should not be transmitted on an OFDM symbol on which the common control channel transmission resource of the cell exists. In addition, the transmission of the PDSCH to other terminal devices may exists within one slot, and the time-domain resources occupied by the PDSCH are consecutive. Therefore, in order to avoid both the influence on other terminal devices and the interference from the PDCCH on the A-IoT channel receiving terminal (e.g., the A-IoT device), one or more OFDM symbols used for transmitting the A-IoT channels may be located at the end of one slot. In other words, the A-IoT device does not expect the received OFDM symbol where the A-IoT channels are located to be located at the start or middle part of one slot.

In some embodiments, if the interrogator node is a terminal device (e.g., the intermediate node in FIG. 7), the interrogator node may transmit the A-IoT channels within an uplink carrier and/or an uplink slot. In this case, the OFDM symbol used for the interrogator node to transmit the A-IoT channels may be configured or dynamically indicated by the network device. In some embodiments, since the network device may schedule the PUSCH transmission of other terminal devices within one slot, and the PDSCH occupies only consecutive time-domain resources, the OFDM symbol used for the interrogator node to transmit the A-IoT channels may be located at the start and/or the end of the slot.

In some embodiments, in the case where the interrogator node is the terminal device, the network device may indicate, to the interrogator node, the time-domain resource used for transmitting the A-IoT channels in one of the following first manner to third manner.

In the first manner, when the network device allocates the time-domain resources for transmitting the A-IoT channel to the interrogator node (terminal device), the network device may indicate the position of the slot where the allocated time-domain resources are located, and the OFDM symbol within the slot that may be used for the interrogator node to transmit the A-IoT channels may be determined according to the PUSCH configuration in the current cell.

Exemplarily, it is assumed that the time-domain resources, allocated by the network device, for transmitting the A-IoT channels are located in the first slot, then, the OFDM symbols available for transmitting the A-IoT channels in the first slot are: all OFDM symbols that cannot be indicated by the mapping type (*mappingType*) configured by the RRC configuration parameter (*PUSCH-TimeDomainResourceAllocationList*) and the symbol start point and length value (*startSymbolAndLength*). In other words, the OFDM symbols available for transmitting the A-IoT channels in the first slot are: OFDM symbols other than at least one first OFDM symbol, and the at least one first OFDM symbol may be determined according to the mapping type, and the symbol start point and length value.

For example, according to the configuration of the PUSCH time-domain resource allocation list field *PUSCH-TimeDomainResourceAllocationList*, two PUSCH configurations may be supported in one slot (e.g., the first slot) in a cell. The first configuration is {*mappingType*=Type A, *startSymbolAndLength*=55}, which represents that the PUSCH adopts a mapping manner of Type A, and occupies 12 OFDM symbols starting from the 0th OFDM symbol. The second configuration is {*mappingType*=Type A, *startSymbolAndLength*=83}, which represents that the PUSCH adopts a mapping manner of Type A, and occupies 10 OFDM symbols starting from the 0th OFDM symbol. In this case, if the first slot includes 14 OFDM symbols with indices of 0 to 13, respectively, the OFDM symbols available for transmitting the A-IoT channel within the first slot are: an OFDM symbol#12 (i.e., an OFDM symbol with an index of 12) and an OFDM symbol#13 (i.e., an OFDM symbol with an index of 13).

In the second manner, when the network device allocates, for the interrogator node (terminal device), time-domain resources for transmitting the A-IoT channels, the network device may transmit the one piece of DCI (denoted as the first DCI) to the interrogator node. The first DCI may indicate a position of a slot where the allocated time-domain resources are located. Moreover, the DCI includes a time domain resource assignment bit field that may indicate the start point and the length of the OFDM symbol.

Exemplarily, it is assumed that the time-domain resources for transmitting the A-IoT channels indicated by the first DCI are located in the first slot, then, the OFDM symbols available for transmitting the A-IoT channels in the first slot are: an OFDM symbol, in the first slot, not indicated by the time domain resource assignment bit field.

For example, the OFDM symbols indicated by the time domain resource assignment bit field in the first DCI are OFDM symbol#0 to OFDM symbol#11. In this case, if the first slot includes 14 OFDM symbols, the OFDM symbols available for transmitting the A-IoT channels within the first slot are: the OFDM symbol#12 and the OFDM symbol#13.

In some embodiments, the first DCI is a DCI format used for allocating, for the interrogator node, the transmission resources for the A-IoT channels.

In the third manner, when the network device allocates, for the interrogator node (terminal device), time-domain resources for transmitting the A-IoT channels, the network device may transmit the one piece of DCI (denoted as the first DCI) to the interrogator node. The first DCI may indicate a position of a slot where the allocated time-domain resources are located. Moreover, the DCI includes a time domain resource assignment bit field.

Exemplarily, it is assumed that the time-domain resources for transmitting the A-IoT channels indicated by the first DCI are located in the first slot, then, the OFDM symbols available for transmitting the A-IoT channels in the first slot are: an OFDM symbol indicated by time domain resource assignment bit field in the first DCI.

In an implementation, one or more allowed symbol start point and length values (*startSymbolAndLength*) may be separately configured within the cell, and a value of the time domain resource assignment bit field in the first DCI may correspond to one of the *startSymbolAndLength*s. In some embodiments, the RRC parameter configuring the one or more allowed *startSymbolAndLength*s is different from the *PUSCH-TimeDomainResourceAllocationLis*. For example, the one or more allowed *startSymbolAndLength*s may be configured by another newly introduced RRC parameter *A-IoT-TimeDomainResourceAllocationLis*.

For example, it is assumed that four allowed *startSymbolAndLength*s are respectively configured within the cell: 0 (representing one OFDM symbol starting from the OFDM symbol#0), 14 (representing two OFDM symbols starting from the OFDM symbol#0), 13 (representing one OFDM symbol starting from the OFDM symbol#13) and 26 (representing two OFDM symbols starting from the OFDM symbol#12), then, the time domain resource assignment bit field may be set to 0, 1, 2 and 3 to respectively correspond to the four configurations. For example, when the value of the time domain resource assignment bit field is set to 0, the corresponding *startSymbolAndLength* is 0. In this case, the OFDM symbol available for transmitting the A-IoT channels in the first slot is one OFDM symbol starting from the OFDM symbol#0. For another example, when the value of the time domain resource assignment bit field is set to 1, the corresponding *startSymbolAndLength* is 14. In this case, the OFDM symbols available for transmitting the A-IoT channels in the first slot are two OFDM symbols starting from OFDM symbol#0.

In some embodiments, the interrogator node may transmit the A-IoT channels to the A-IoT device by using the following first scheme, second scheme, or third scheme.

In the first scheme, the interrogator node transmits multiple A-IoT channels in the time division manner.

In the second scheme, the interrogator node transmits multiple A-IoT channels by means of frequency division (denoted as a first frequency division manner) within the carrier range.

In the third scheme, the interrogator node transmits multiple A-IoT channels by means of frequency division (denoted as a second frequency division manner) within the carrier range.

The first scheme, the second scheme and the third scheme are respectively introduced below.

### First scheme

In the first scheme, the interrogator node transmits multiple A-IoT channels in the time division manner.

In some embodiments, the A-IoT channel may be a fixed channel, i.e., the interrogator node may transmit multiple fixed channels in the time division manner. The fixed channel occupies a fixed duration, and the fixed duration may be referred to as one fixed channel time resource or one fixed resource.

In some embodiments, one fixed channel time resource may be located within one OFDM symbol, thereby avoiding fragmentation of the resource. For example, it is assumed that the fixed channel is the control channel, the fixed duration occupied by the control channel may be referred to as one fixed resource having a length less than one OFDM symbol, and the interrogator node may transmit of the multiple fixed channels within one OFDM symbol or within multiple consecutive OFDM symbols.

In an implementation, the multiple fixed channels may be consecutive in time, and the receiving terminal (A-IoT device) may determine the time start point of each fixed channel through the signal of the start of each fixed channel.

In another implementation, gap(s) may exist between the multiple fixed channels, which facilitates simplification of the complexity of the receiving terminal (A-IoT device) in determining the time start point of the fixed channel.

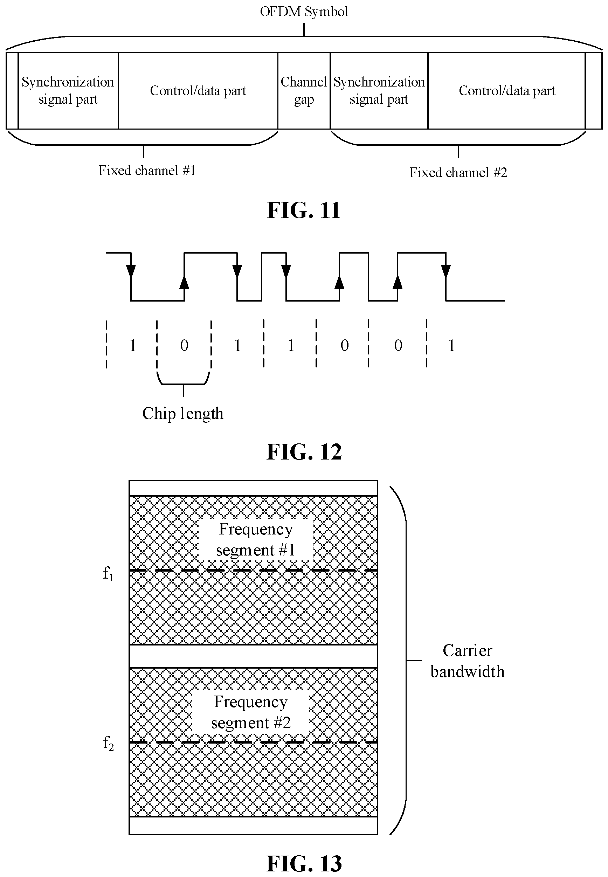

FIG. 11 is a schematic diagram of transmitting two fixed channels within one OFDM symbol according to an embodiment of the present disclosure. As shown in FIG. 11, one OFDM symbol may include two fixed channel time resources respectively for transmitting the fixed channel#1 and the fixed channel#2. The existence of the channel gap(s) is supported between the two fixed channel time resources.

In the first scheme, the fixed channel may be transmitted in the time division manner. In this case, in order to fully utilize the channel bandwidth/frequency resources, in some embodiments, the chip length of the fixed channel may be less than the chip length of another channel. Exemplarily, in a case where the fixed channel is a control channel, the chip length N of the control channel may be less than the chip length M of the data channel associated with (indicated by) the control channel. For example, M may be K times N, K is an integer greater than 1, for example, K may be 2, 4, 8, or the like. For example, the values of N and M may be configured by the interrogator node or may be pre-configured.

It is to be noted that in the embodiments of the present disclosure, the chip length refers to the time length of physical symbol carrying one bit of information. For example, FIG. 12 shows seven pieces of bit information and a Manchester coded waveform corresponding to the seven pieces of bit information. Herein, the time length of the physical symbol carrying each piece of bit information is one chip length.

In some embodiments, the A-IoT channel may be a variable channel, i.e., the interrogator node may transmit multiple variable channels in the time division manner. In this case, the length of the variable channel is fixed; or the length of the variable channel is not fixed, but the receiving terminal (A-IoT device) knows the length of the variable channel before receiving the variable channel.

In some embodiments, the carrier frequency for the interrogator node to transmit the A-IoT channels (fixed channels/variable channels) is the frequency of the current carrier.

According to the method in the first scheme, the interrogator node transmits the multiple A-IoT channels in the time division manner. In this way, the A-IoT device may receive, by using the radio frequency receiver, the A-IoT channels from the interrogator node, without using the high-performance filter, thereby facilitating reducing the complexity and energy consumption of the A-IoT device receiving the A-IoT channel.

### Second scheme

In the second scheme, the interrogator node transmits, within the carrier range, multiple A-IoT channels in the first frequency division manner.

In some embodiments, the A-IoT channel may be a fixed channel, i.e., the interrogator node may transmit multiple fixed channels in the first frequency division manner within the carrier range. The fixed channel occupies a fixed duration and is transmitted in a specific frequency domain range. In some embodiments, the A-IoT channel may be a variable channel, i.e., the interrogator node may transmit multiple variable channels in the first frequency division manner within the carrier range. The frequency division multiplexed variable channels have the same length.

In some embodiments, one carrier bandwidth may be divided into multiple consecutive frequency segments or frequency segments with gap(s) between the frequency segments. Within each frequency segment, one A-IoT channel may be transmitted. In some embodiments, in each frequency segment, the transmission carrier frequency of the first channel may be a center frequency of the frequency segment, thereby avoiding the interference between the A-IoT channels transmitted within adjacent frequency segments as much as possible.

For example, FIG. 13 shows schematic diagram of dividing a carrier bandwidth into two frequency segments. As shown in FIG. 13, the carrier bandwidth may include two frequency segments: a frequency segment#1 and a frequency segment#2. One A-IoT channel may be transmitted in each frequency segment. For example, within the frequency segment#1, the transmission carrier frequency of the A-IoT channel may be a center frequency f₁ of the frequency segment#1. Within the frequency segment#2, the transmission carrier frequency of the A-IoT channel may be a center frequency f₂ of the frequency segment#2. Exemplarily, a gap exists or no gap exists between the frequency segment#1 and the frequency segment#2. FIG. 13 shows an example where there is a gap between the frequency segment#1 and the frequency segment#2.

In an implementation (referred to as an implementation#1) of the second scheme, the division of the frequency segments may be configured by the interrogator node or may be pre-configured. In this way, for the receiving device (A-IoT device) of the A-IoT channel, the start point and end point of the frequency segment may be determined according to the configuration or pre-configuration.

In some embodiments, an A-IoT device may support one frequency segment and may receive the A-IoT channel within the frequency segment. In some embodiments, the A-IoT device may support multiple frequency segments, one of the multiple frequency segments is a default frequency segment. In this case, the A-IoT device may receive the A-IoT channel on the default frequency segment before reporting other frequency segments to the interrogator node, and other frequency segments may be used for the reception of the A-IoT channel after the A-IoT device reports other frequency segments to the interrogator node.

In some embodiments, the interrogator node may decide, based on the configured/pre-configured frequency segment and/or the frequency segment reported by the A-IoT device, on which frequency segment or frequency segments to transmit the A-IoT channels.

In another implementation (denoted as an implementation#2) of the second scheme, the carrier frequency available for the A-IoT channel (or the carrier frequency used for transmitting the A-IoT channel) may be configured by the interrogator node or pre-configured. In some embodiments, the carrier frequencies available for the A-IoT channel may be within the same carrier bandwidth range. For example, in the example of FIG. 13, the carrier frequencies for transmitting the A-IoT channels that is configured by the interrogator node or pre-configured are f₁ and f₂, respectively, and the receiving terminal (A-IoT device) of the A-IoT channel may determine the values of f₁ and f₂ according to the configuration of the interrogator node or the pre-configuration.

In some embodiments, the A-IoT device may support one carrier frequency and may receive the A-IoT channel on the one carrier frequency. In some embodiments, the A-IoT device may support multiple carrier frequencies, one of the multiple carrier frequencies is a default carrier frequency. In this case, the A-IoT device may receive the A-IoT channel on the default carrier frequency before reporting other carrier frequencies to the interrogator node, and other carrier frequencies may be used for the reception of the A-IoT channel after the A-IoT device reports other carrier frequencies to the interrogator node.

In some embodiments, the interrogator node may decide, based on the configured/pre-configured carrier frequency and/or the carrier frequency reported by the A-IoT device, on which carrier frequency or carrier frequencies to transmit the A-IoT channels.

In the implementation#2, the bandwidth for transmitting the signal (e.g., the A-IoT channel) on each carrier frequency may be a specific value. For example, the specific value may be defined in the protocol or pre-configured, and the specific value should be less than or equal to the carrier bandwidth.

In some embodiments, the bandwidth occupied by one A-IoT channel in the first frequency division manner may be greater than the bandwidth occupied by one A-IoT channel in the second frequency division manner. Since the bandwidth occupied by each A-IoT channel in the first frequency division manner is large, in order to fully utilize the channel bandwidth/frequency resources, the chip length of the A-IoT channel transmitted in the first frequency division manner may be less than the chip length of the A-IoT channel transmitted in the second frequency division manner. For example, it is assumed that the A-IoT channels transmitted by using the first frequency division manner is the control channels, and the data channels associated with (indicated by) the control channels are transmitted by using the second frequency division manner, then, in order to make full use of the channel bandwidth/frequency resources, the chip length of the control channel may be less than the chip length of the data channel associated with (indicated by) the control channel.

According to the method in the second scheme, the interrogator node transmits multiple A-IoT channels in the frequency division manner (the first frequency division manner), which facilitates increasing the system capacity. In addition, since each A-IoT channel occupies a large bandwidth in the first frequency division manner, the A-IoT device may receive, by using the filter with poor performance, the A-IoT channel from the interrogator node, thereby facilitating reducing the complexity and energy consumption of the A-IoT device receiving the A-IoT channel.

### Third scheme

In the third scheme, the interrogator node transmits multiple A-IoT channels in the second frequency division manner within the carrier range.

In some embodiments, the A-IoT channel may be a fixed channel, i.e., the interrogator node may transmit multiple fixed channels in the second frequency division manner within the carrier range. The fixed channel occupies a fixed duration and is transmitted in a specific frequency domain range. In some embodiments, the A-IoT channel may be a variable channel, i.e., the interrogator node may transmit multiple variable channels in the second frequency division manner within the carrier range. The frequency division multiplexed variable channels have the same length.

In some embodiments, one A-IoT channel may be transmitted on one carrier group within one carrier bandwidth or within one band. One carrier group may include one or more subcarriers. In the third scheme, the interrogator node may transmit multiple A-IoT channels by using multiple carrier groups, and for example, frequency-domain gap(s) between different carrier groups may be greater than a certain particular value.

Exemplarily, it is assumed that one carrier group includes one subcarrier, one carrier bandwidth or one band includes M carrier groups. In this case, the frequency *f* of each subcarrier may be calculated by the following formula: *f* = *f*₀ + *m* × *K* × Δ*f*. Where *f*₀ is the frequency reference point, for example, *f*₀ may be the lowest frequency position of the current carrier bandwidth or the center frequency position of the current carrier bandwidth; m is an index of a carrier group; *K* is a fixed value, e.g. *K*=A×12, for example, a value of A may be defined in the protocol, configured by the network device or may be pre-configured, and a value of *K* may be used for meeting the minimum gap between different carrier groups; and Δ*f* is the reference subcarrier spacing, e.g., 15 kHz.

In some embodiments, if the interrogator node is the terminal device, the time resources (time-domain resources) and the carrier group used for the interrogator node to transmit the A-IoT channels may be indicated by the network device. Herein, the manner where the network device indicates, to the interrogator node, the time resources for transmitting the A-IoT channels may refer to the aforementioned first manner to third manner, which will not be repeated herein.

In some embodiments, the network device may allocate/indicate, through the DCI or the configured grant, one or more carrier groups for transmitting the A-IoT channels to the interrogator node. Furthermore, the interrogator node may indicate one or more carrier groups to the A-IoT device, so that the A-IoT device may receive an A-IoT channel from the interrogator node within the one or more carrier groups indicated by the interrogator node. Exemplarily, the indication (for indicating one or more carrier groups) of the interrogator node may be carried through a control channel, or by higher-layer signaling. If the indication of the interrogator node is carried through the control channel, one bit field may exist in the control channel, and the bit field may be used for indicating the indices of one or more carrier groups.

In some embodiments, the bandwidth occupied by one A-IoT channel in the second frequency division manner may be less than the bandwidth occupied by one A-IoT channel in the first frequency division manner. Therefore, the interrogator node transmits multiple A-IoT channels by using the second frequency division manner, which can further increase the system capacity.

According to the method in the embodiments of the present disclosure, the interrogator node may transmit multiple A-IoT channels through the time division manner, the first frequency division manner, or the second frequency division manner.

The multiple A-IoT channels are transmitted in the time division manner, which may be understood as: multiple A-IoT channels are transmitted at different moments within a specific time range (e.g., within a time range corresponding to one slot or one OFDM symbol). The multiple A-IoT channels are transmitted in the frequency division manner (e.g., the first frequency division manner/the second frequency division manner), which may be understood as: the multiple A-IoT channels are transmitted at different frequency parts within the same carrier bandwidth range. In some embodiments, in the first frequency division manner, the minimum bandwidth of each frequency part is not less than X. In the second frequency division manner, the minimum bandwidth of each frequency part is not less than Y, where X is greater than or equal to Y.

In a possible implementation (denoted as implementation A), the interrogator node may transmit multiple first A-IoT channels in the time division manner and multiple second A-IoT channels in the first frequency division manner or the second frequency division manner.

The first A-IoT channel may be the fixed channel, e.g., the control channel, and the second A-IoT channel may be the variable channel, e.g., the data channel.

In the embodiment A, the interrogator node may transmit multiple first A-IoT channels (e.g. the control channels) in the time division manner, and if the interrogator node is the terminal device, the time resources for the interrogator node to transmit the first A-IoT channels may be indicated by the network device. The manner where the network device indicates the time resources to the interrogator node may refer to the aforementioned first manner to third manner, which will not be repeated herein.

In the implementation A, the interrogator node may transmit multiple second A-IoT channels (e.g., the data channels) in the first frequency division manner or the second frequency division manner. If the interrogator node transmits the multiple second A-IoT channels in the first frequency division manner, the interrogator node may transmit the second A-IoT channels within multiple frequency segments or on multiple carrier frequencies (with reference to the aforementioned second scheme). When the interrogator node is the terminal device, if the interrogator node transmits the multiple second A-IoT channels in the second frequency division manner, the interrogator node may transmit, according to the indication of the network device, the second A-IoT channels in multiple carrier groups, and the indication manner of the carrier groups may refer to the aforementioned third scheme.

In a possible implementation (denoted as an implementation B), the interrogator node may transmit the multiple first A-IoT channels in the first frequency division manner and multiple second A-IoT channels in the second frequency division manner. The implementation where the interrogator node transmits the multiple first A-IoT channels in the first frequency division manner may refer to the aforementioned second scheme. The implementation where the interrogator node transmits the multiple second A-IoT channels in the second frequency division manner may refer to the aforementioned third scheme.

Exemplarily, in the implementation A and implementation B, the A-IoT device may firstly detect the control channels transmitted by the interrogator node, so as to receive, from the interrogator node, the data channels according to the indications of the control channels. For example, the control channels indicate indices of one or more carrier groups scheduled by the control channels, then, the A-IoT device may receive, according to the indices of the one or more carrier groups, the data channels on the one or more carrier groups.

In another possible implementation (denoted as an implementation C), all the A-IoT channels (including the control channels and the data channels) may be transmitted in the second frequency division manner. For example, the interrogator node may firstly transmit the multiple control channels by using the second frequency division manner, for example, the interrogator node may transmit the control channels by using one or more fixed carrier groups, and correspondingly, the A-IoT device may receive the control channels from the interrogator node in the one or more fixed carrier groups. Then, the interrogator node may transmit the data channels associated with (indicated by) the control channels in the second frequency division manner, so that the A-IoT device may receive, from the interrogator node, the data channels according to the indications of the control channels.

According to the method in the embodiments of the present disclosure, the A-IoT channels may be transmitted through the time division manner, the first frequency division manner, or the second frequency division manner. The method is advantageous for increasing the transmission flexibility of the A-IoT channels. The A-IoT channels are transmitted through the first frequency division manner is beneficial to reducing the implementation complexity and energy consumption of the A-IoT device, and improving the system capacity. The A-IoT channels are transmitted through the second frequency division manner is beneficial to further improve the system capacity.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It is further to be understood that in various method embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure. In addition, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2 For example, a "downlink signal" represents that the transmission direction of the signal is the first direction. In addition, in the embodiments of the present disclosure, the term "and/or" is only an association relationship describing associated objects and represents that three relationships may exist. Specifically, A and/or B may represent three conditions: i.e., independent existence of A, existence of both A and B and independent existence of B. In addition, the character "/" in the present disclosure generally indicates that the relationship between the related objects is "or".

Based on the aforementioned embodiments, the embodiments of the present disclosure provide corresponding communication devices.

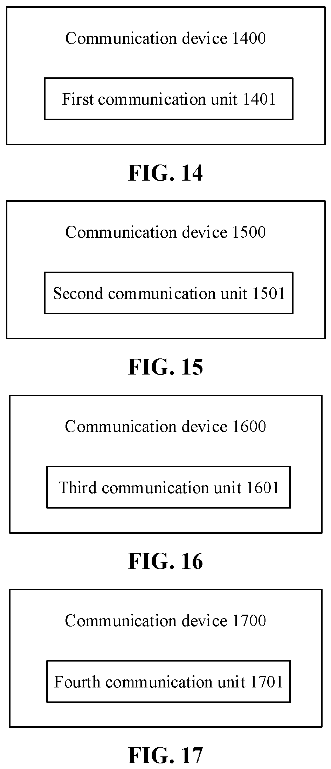

FIG. 14 is a first schematic diagram of a structural composition of a communication device according to an embodiment of the present disclosure. The communication device is applied to a first device. As shown in FIG. 14, the communication device 1400 (hereinafter referred to as a device 1400) includes a first communication unit 1401.

The first communication unit 1401 is configured to transmit multiple first channels, where the multiple first channels occupy different time ranges and a same frequency range, different first channels among the multiple first channels are received by different A-IoT devices or a same A-IoT device, and the first channels are control channels or data channels.

In some embodiments, the multiple first channels are located within one or more OFDM symbols; in a case where the device 1400 is a network device, the one or more OFDM symbols are located at an end of one slot; and in a case where the device 1400 is the terminal device, the one or more OFDM symbols are located at a start and/or an end of one slot.

In some embodiments, the multiple first channels are located within one or more OFDM symbols; the one or more OFDM symbols are: OFDM symbols, other than at least one first OFDM symbol, within a first slot; and in a case where the device 1400 is a terminal device, the first slot, and a start point and a length of the at least one first OFDM symbol are indicated by a network device.

In some embodiments, in the case where the device 1400 is the terminal device, the first slot is indicated through DCI or a configured grant from the network device, and the start point and the length of the at least one first OFDM symbol are indicated through a RRC configuration parameter from the network device; or in the case where the device 1400 is the terminal device, the first slot, and the start point and length of the at least one first OFDM symbol are indicated by a DCI or a configured grant from the network device.

In some embodiments, the multiple first channels are located within one or more OFDM symbols; the one or more OFDM symbols are: at least one second OFDM symbol within a first slot; and in a case where the device 1400 is a terminal device, the first slot, and a start point and a length of the at least one second OFDM symbol are indicated by a network device.

In some embodiments, in the case where the device 1400 is the terminal device, the first slot, and the start point and length of the at least one second OFDM symbol, are indicated through DCI or a configured grant from the network device.

In some embodiments, the multiple first channels are consecutive in a time domain; or gap(s) exist between the multiple first channels.

In some embodiments, the multiple first channels are the control channels, a chip length of one of the control channels may be less than a chip length of a data channel associated with the control channel.

In some embodiments, the multiple first channels are the data channels, each of the multiple first channels occupies a same duration, or a part of the multiple first channels occupy different durations. In a case where the part of the multiple first channels occupy different durations, the A-IoT device receiving a first data channel knows a duration occupied by the first data channel before receiving the first data channel. The first data channel is included in the multiple first channels.

In some embodiments, the multiple first channels are located within one or more OFDM)symbols. In a case where the first channels are the control channels, the multiple first channels are modulated on a first carrier within the one or more OFDM symbols, no carrier other than the first carrier exists within the one or more OFDM symbols. In a case where the first channels are the data channels, the multiple first channels are modulated on a part of subcarriers within the one or more OFDM symbols.

In some embodiments, the first communication unit 1401 is further configured to: in the case where the first channels are the control channels, transmit multiple second channels, where the multiple second channels occupy different frequency ranges and a same time range. Different second channels among the multiple second channels are received by different A-IoT devices or a same A-IoT device, and the second channels are data channels.

In some embodiments, the multiple second channels are transmitted on multiple frequency segments. The multiple frequency segments are pre-configured, or configured by the device 1400, and a gap exists or no gap exists between different frequency segments.

In some embodiments, in one frequency segment, the carrier frequency used for transmitting the second channel may be a center frequency of the frequency segment.

In some embodiments, part or all of the multiple second channels are transmitted to a first A-IoT device. The multiple frequency segments include: a frequency segment used by the first A-IoT device by default for channel reception, and/or a frequency segment reported by the first A-IoT device. The frequency segment reported by the first A-IoT device includes all or part of frequency segments available for the channel reception by the first A-IoT device.

In some embodiments, the multiple second channels are transmitted on multiple carrier frequencies. The multiple carrier frequencies are pre-configured, or configured by the device 1400.

In some embodiments, part or all of the multiple second channels are transmitted to a first A-IoT device. The multiple carrier frequencies include: a carrier frequency used by the first A-IoT device by default for channel reception, and/or a carrier frequency reported by the first A-IoT device. The carrier frequency reported by the first A-IoT device includes all or part of carrier frequencies available for the channel reception by the first A-IoT device.

In some embodiments, a bandwidth for transmitting the multiple second channels is a preconfigured or predefined first bandwidth. The first bandwidth is less than a carrier bandwidth, and the multiple carrier frequencies are included in a frequency range corresponding to the carrier bandwidth.

In some embodiments, the multiple second channels are transmitted on multiple carrier groups. Each carrier group is used for transmitting one second channel, and each carrier group includes one or more subcarriers.

In some embodiments, the multiple carrier groups include a first subcarrier. A frequency of the first subcarrier is related to following parameters: a frequency reference point; an index of a carrier group where the first subcarrier is located; and a reference subcarrier spacing.

In some embodiments, in a case where the device 1400 is a terminal device, the multiple carrier groups are indicated through DCI or a configured grant from a network device.

In some embodiments, the multiple first channels include a first control channel. The first control channel is associated with at least one of the multiple second channels, and the at least one of the multiple second channels is transmitted on at least one of the multiple carrier groups. The first control channel carries an index of the at least one carrier group.

In some embodiments, the first communication unit 1401 is further configured to: before transmitting the multiple second channels, transmit first indication information to a first A-IoT device. The first indication information is used for indicating an index of at least one carrier group, the index of the at least one carrier group is used for the first A-IoT device to receive the second channel on the at least one carrier group, and the at least one carrier group is included in the multiple carrier groups.

In some embodiments, the device 1400 is a network device or a terminal device.

FIG. 15 is a second schematic diagram of a structural composition of a communication device according to an embodiment of the present disclosure. The communication device is applied to an A-IoT device. As shown in FIG. 15, the communication device 1500 (hereinafter referred to as device 1500) includes a second communication unit 1501.

The second communication unit 1501 is configured to receive at least one first channel from a first device, where the at least one first channel is all or a part of multiple first channels transmitted by the first device, the multiple first channels occupy different time ranges and a same frequency range, and the first channels are control channels or data channels.

In some embodiments, the multiple first channels are located within one or more OFDM symbols; in a case where the first device is a network device, the one or more OFDM symbols are located at an end of one slot; and in a case where the first device is the terminal device, the one or more OFDM symbols are located at a start and/or an end of one slot.

In some embodiments, the multiple first channels are consecutive in a time domain; or gap(s) exist between the multiple first channels.

In some embodiments, the multiple first channels are the control channels, and a chip length of one of the control channels is less than a chip length of a data channel associated with the control channel.

In some embodiments, the multiple first channels are the data channels, each of the multiple first channels occupies a same duration, or a part of the multiple first channels occupy different durations. In a case where the part of the multiple first channels occupy different durations, the device 1500 knows a duration occupied by a first data channel before receiving the first data channel. The first data channel is included in the at least one first channel.

In some embodiments, the multiple first channels are located within one or more OFDM symbols. In a case where the first channels are the control channels, the multiple first channels are modulated on a first carrier within the one or more OFDM symbols, no carrier other than the first carrier exists within the one or more OFDM symbols. In a case where the first channels are the data channels, the multiple first channels are modulated on a part of subcarriers within the one or more OFDM symbols.

In some embodiments, the second communication unit 1501 is further configured to: in the case where the first channels are the control channels, receive at least one second channel from the first device, where the at least one second channel is all or a part of multiple second channels transmitted by the first device, the multiple second channels occupy different frequency ranges and a same time range, and the second channels are the data channels.

In some embodiments, at least one frequency segment for receiving the at least one second channel includes: a frequency segment used by the device 1500 by default for channel reception, and/or a frequency segment reported by the device 1500. The frequency segment reported by the device 1500 includes all or part of frequency segments available for the channel reception by the device 1500.

In some embodiments, at least one carrier frequency for receiving the at least one second channel comprise: a carrier frequency used by the device 1500 by default for channel reception, and/or a carrier frequency reported by the device 1500. The carrier frequency reported by the device 1500 includes all or part of carrier frequencies available for the channel reception by the device 1500.

In some embodiments, at least one carrier group for receiving the at least one second channel is indicated through the at least one first channel, or indicated through first indication information from the first device.

In some embodiments, the first device is a network device or a terminal device.

FIG. 16 is a third schematic diagram of a structural composition of a communication device according to an embodiment of the present disclosure. The communication device is applied to a first device. As shown in FIG. 16, the communication device 1600 (hereinafter referred to as a device 1600) includes a third communication unit 1601.

The third communication unit 1601 is configured to transmit multiple first channels, where the multiple first channels occupy different frequency ranges and a same time range, different first channels among the multiple first channels are received by different A-IoT devices or a same A-IoT device, and the first channels are control channels or data channels.

In some embodiments, the multiple first channels are transmitted on multiple frequency segments. The multiple frequency segments are pre-configured, or configured by the device 1600, and a gap exists or no gap exists between different frequency segments.

In some embodiments, in one frequency segment, the carrier frequency used for transmitting the first channel is a center frequency of the frequency segment.

In some embodiments, part or all of the multiple first channels are transmitted to a first A-IoT device. The multiple frequency segments include: a frequency segment used by the first A-IoT device by default for channel reception, and/or a frequency segment reported by the first A-IoT device. The frequency segment reported by the first A-IoT device includes all or part of frequency segments available for the channel reception by the first A-IoT device.

In some embodiments, the multiple first channels are transmitted on multiple carrier frequencies, the multiple carrier frequencies are pre-configured, or configured by the device 1600.

In some embodiments, part or all of the multiple first channels are transmitted to a first A-IoT device. The multiple carrier frequencies include: a carrier frequency used by the first A-IoT device by default for channel reception, and/or a carrier frequency reported by the first A-IoT device. The carrier frequency reported by the first A-IoT device includes all or part of carrier frequencies available for the channel reception by the first A-IoT device.

In some embodiments, a bandwidth for transmitting the multiple first channels is a preconfigured or predefined first bandwidth. The first bandwidth is less than a carrier bandwidth, and the multiple carrier frequencies are included in a frequency range corresponding to the carrier bandwidth.

In some embodiments, the third communication unit 1601 is further configured to: in the case where the first channels are the control channels, transmit multiple second channels on multiple carrier groups within a same time range, where each of the multiple carrier groups is used for transmitting one of the multiple second channel, each of the multiple carrier groups includes one or more subcarriers, and different second channels among the multiple second channels are received by different A-IoT devices or a same A-IoT device, and the second channels are data channels.

In some embodiments, the multiple carrier groups include a first subcarrier. A frequency of the first subcarrier is related to following parameters: a frequency reference point; an index of a carrier group where the first subcarrier is located; and a reference subcarrier spacing.

In some embodiments, in a case where the device 1600 is a terminal device, the multiple carrier groups are indicated through DCI or a configured grant from a network device.

In some embodiments, the multiple first channels include a first control channel. The first control channel is associated with at least one of the multiple second channels, and the at least one of the multiple second channels is transmitted on at least one of the multiple carrier groups. The first control channel carries an index of the at least one carrier group.

In some embodiments, the third communication unit 1601 is further configured to: before transmitting the multiple second channels on the multiple carrier groups within the same time range, transmit first indication information to a first A-IoT device, where the first indication information is used for indicating an index of at least one carrier group, the index of the at least one carrier group is used for the first A-IoT device to receive the second channel on the at least one carrier group, and the at least one carrier group is included in the multiple carrier groups.

In some embodiments, the multiple first channels are transmitted on multiple first carrier groups. Each first carrier group is used for transmitting one first channel, and each carrier group includes one or more subcarriers.

In some embodiments, the multiple first carrier groups include a first subcarrier. A frequency of the first subcarrier is related to following parameters: a first frequency reference point; an index of a first carrier group where the first subcarrier is located; and a first reference subcarrier spacing.

In some embodiments, in a case where the device 1600is a terminal device, the multiple first carrier groups are indicated through DCI or a configured grant from a network device.

In some embodiments, the third communication unit 1601 is further configured to: in the case where the first channels are the control channels, transmit multiple second channels on multiple second carrier groups within a same time range, where each second carrier groups is used for transmitting one of the multiple second channel, each second carrier groups includes one or more subcarriers, and different second channels among the multiple second channels are received by different A-IoT devices or a same A-IoT device, and the second channels are data channels.

In some embodiments, the multiple second carrier groups include a second subcarrier. A frequency of the second subcarrier is related to following parameters: a second frequency reference point; an index of a second carrier group where the second subcarrier is located; and a second reference subcarrier spacing.

In some embodiments, in a case where the device 1600 is a terminal device, the multiple second carrier groups are indicated through DCI or a configured grant from a network device.

In some embodiments, the multiple first channels include a first control channel. The first control channel is associated with at least one of the multiple second channels, and the at least one of the multiple second channels is transmitted on at least one of the multiple second carrier groups, The first control channel carries an index of the at least one second carrier group.

In some embodiments, the third communication unit 1601 is further configured to: before transmitting the multiple second channels on the multiple second carrier groups within the same time range, transmit first indication information to a first A-IoT device, where the first indication information is used for indicating an index of at least one second carrier group, the index of the at least one second carrier group is used for the first A-IoT device to receive the second channel on the at least one second carrier group, and the at least one second carrier group is included in the multiple second carrier groups.

In some embodiments, the multiple first channels include a first control channel. The first control channel is associated with at least one of the multiple second channels, and a chip length of the first control channel is less than a chip length of the at least one of the multiple second channels.

In some embodiments, the multiple first channels are located within one or more OFDM symbols; in a case where the device 1600 is a network device, the one or more OFDM symbols are located at an end of one slot; and in a case where the device 1600 is the terminal device, the one or more OFDM symbols are located at a start and/or an end of one slot.

In some embodiments, the multiple first channels are located within one or more OFDM symbols; the one or more OFDM symbols are: OFDM symbols, other than at least one first OFDM symbol, within a first slot; and in a case where the device 1600 is a terminal device, the first slot, and a start point and a length of the at least one first OFDM symbol are indicated by a network device.

In some embodiments, in the case where the device 1600 is the terminal device, the first slot is indicated through DCI or a configured grant from the network device, and the start point and the length of the at least one first OFDM symbol are indicated through a RRC configuration parameter from the network device; or in the case where the device 1600 is the terminal device, the first slot, and the start point and length of the at least one first OFDM symbol are indicated by a DCI or a configured grant from the network device.

In some embodiments, the multiple first channels are located within one or more OFDM symbols; the one or more OFDM symbols are: at least one second OFDM symbol within a first slot; and in a case where the device 1600 is a terminal device, the first slot, and a start point and a length of the at least one second OFDM symbol are indicated by a network device.

In some embodiments, in the case where the device 1600 is the terminal device, the first slot, and the start point and length of the at least one second OFDM symbol are indicated through DCI or a configured grant from the network device.

In some embodiments, the multiple first channels are located within one or more OFDM symbols. In a case where the first channels are the control channels, the multiple first channels are modulated on a first carrier within the one or more OFDM symbols, no carrier other than the first carrier exists within the one or more OFDM symbols. In a case where the first channels are the data channels, the multiple first channels are modulated on a part of subcarriers within the one or more OFDM symbols.

In some embodiments, the device 1600 is a network device or a terminal device.

FIG. 17 is a fourth schematic diagram of a structural composition of a communication device according to an embodiment of the present disclosure. The communication device is applied to an A-IoT device. As shown in FIG. 17, the communication device 1700 (hereinafter referred to as a device 1700) includes a fourth communication unit 1701.

The fourth communication unit 1701 is configured to receive at least one first channel from a first device, where the at least one first channel is all or a part of multiple first channels transmitted by the first device, the multiple first channels occupy different frequency ranges and a same time range, and the first channels are control channels or data channels.

In some embodiments, at least one frequency segment for receiving the at least one first channel includes: a frequency segment used by the device 1700 by default for channel reception, and/or a frequency segment reported by the device 1700. The frequency segments reported by the device 1700 includes all or part of frequency segments available for the channel reception by the device 1700.

In some embodiments, at least one carrier frequency for receiving the at least one first channel includes: a carrier frequency used by the device 1700 by default for channel reception, and/or a carrier frequency reported by the device 1700. The carrier frequency reported by the device 1700 includes all or part of carrier frequencies available for the channel reception by the device 1700.

In some embodiments, the fourth communication unit 1701 is further configured to: in the case where the first channels are the control channels, receive at least one second channel from the first device on at least one carrier group, where the at least one second channel is all or a part of multiple second channels transmitted by the first device, the multiple second channels occupy different frequency ranges and a same time range, and the second channels are the data channels.

In some embodiments, at least one carrier group is indicated through the at least one first channel, or indicated through first indication information from the first device.

In some embodiments, at least one first carrier group for receiving the at least one first channel is indicated by the first device.

In some embodiments, the fourth communication unit 1701 is further configured to: in the case where the first channels are the control channels, receive at least one second channel from the first device on at least one second carrier group, where the at least one second channel is all or a part of multiple second channels transmitted by the first device, the multiple second channels occupy different frequency ranges and a same time range, and the second channels are the data channels.

In some embodiments, the at least one second carrier group is indicated through the at least one first channel, or indicated through first indication information from the first device.

In some embodiments, the multiple first channels include a first control channel. The first control channel is associated with at least one of the multiple second channels, and a chip length of the first control channel is less than a chip length of the at least one of the multiple second channels.

In some embodiments, the multiple first channels are located within one or more OFDM symbols. In a case where the first device is a network device, the one or more OFDM symbols are located at an end of one slot. In a case where the first device is the terminal device, the one or more OFDM symbols are located at a start and/or an end of one slot.

In some embodiments, the multiple first channels are located within one or more OFDM symbols. In a case where the first channels are the control channels, the multiple first channels are modulated on a first carrier within the one or more OFDM symbols, no carrier other than the first carrier exists within the one or more OFDM symbols. In a case where the first channels are the data channels, the multiple first channels are modulated on a part of subcarriers within the one or more OFDM symbols.

In some embodiments, the first device is a network device or a terminal device.

Those skilled in the art will appreciate that the related descriptions of the aforementioned communication device in the embodiments of the present disclosure may be understood with reference to the descriptions of the aforementioned communication method in the embodiments of the present disclosure.

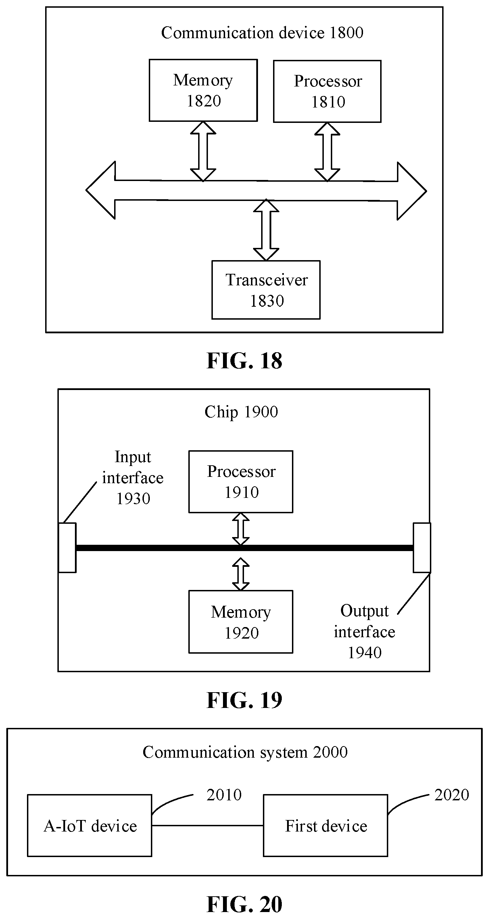

FIG. 18 is a schematic structural diagram of a communication device 1800 according to an embodiment of the present disclosure. The communication device may be a terminal device, or a network device. The communication device 1800 shown in FIG. 18 includes a processor 1810. The processor 1810 is configured to invoke and execute a computer program from a memory, to implement the methods in the embodiments of the present disclosure.

Optionally, as illustrated in FIG. 18, the communication device 1800 includes a memory 1820. The processor 1810 is configured to invoke and execute a computer program from the memory 1820, to perform the methods in the embodiments of the present disclosure.

The memory 1820 may be a separate device that is independent of the processor 1810 or may be integrated in the processor 1810.

Optionally, as illustrated in FIG. 18, the communication device 1800 may further include a transceiver 1830. The processor 1810 may control the transceiver 1830 to communicate with other devices. Specifically, the transceiver 1830 may send information or data to other devices, or receive information or data from other devices.

Herein, the transceiver 1830 may include a transmitter and a receiver. The transceiver 1830 may further include one or more antennas.

Optionally, the communication device 1800 may specifically be the first device in the embodiments of the present disclosure. The communication device 1800 may implement the corresponding flow implemented by the first device in various methods in the embodiments of the present disclosure. For brevity, details are not elaborated herein again.

Optionally, the communication device 1800 may be the A-IoT device in the embodiments of the present disclosure. The communication device 1800 may implement the corresponding flow implemented by the A-IoT device in various methods in the embodiments of the present disclosure. For brevity, details are not elaborated herein again.

FIG. 19 is a schematic structural diagram of a chip in an embodiment of the present disclosure. The chip 1900 shown in FIG. 19 includes a processor 1910. The processor 1910 is configured to invoke and execute a computer program from a memory, to implement the methods in the embodiments of the present disclosure.

Optionally, as illustrated in FIG. 19, the chip 1900 includes a memory 1920. The processor 1910 is configured to invoke and execute a computer program from the memory 1920, to perform the methods in the embodiments of the present disclosure.

The memory 1920 may be a separate device that is independent of the processor 1910 or may be integrated in the processor 1910.

Optionally, the chip 1900 may further include an input interface 1930. The processor 1910 may control the input interface 1930 to communicate with other devices or chips. Specifically, the input interface 1930 may acquire information or data sent by other devices or chips.

Optionally, the chip 1900 may further include an output interface 1940. Herein, the processor 1910 may control the output interface 1940 to communicate with other devices or chips. Specifically, the output interface 1940 may output information or data to other devices or chips.

Optionally, the chip may be applied to the first device in the embodiments of the present disclosure. The chip may implement the corresponding flow implemented by the first device in various methods in the embodiments of the present disclosure. For brevity, details are not elaborated herein again.

Optionally, the chip may be applied to the A-IoT device in the embodiments of the present disclosure. The chip may implement the corresponding flow implemented by the A-IoT device in various methods in the embodiments of the present disclosure. For brevity, details are not elaborated herein again.

It should be understood that, the chip referred to in the embodiments of the present disclosure may also be referred to as a system-level chip, a system chip, a chip system, or a system-on-chip, etc.

The embodiments of the present disclosure provide a computer-readable storage medium. The computer-readable storage medium has stored one or more programs that, when executed by one or more processors, implement the methods in the embodiments of the present disclosure.

FIG. 20 is a schematic structural diagram of a communication system 2000 according to an embodiment of the present disclosure. As shown in FIG. 20, the communication system 2000 may include an A-IoT device 2010 and a first device 2020.

Herein, the A-IoT device 2010 may be configured to implement the corresponding functions implemented by the A-IoT device in the foregoing methods. The first device 2020 may be configured to implement the corresponding functions implemented by the first device in the foregoing methods. For brevity, details are not elaborated herein again.

It is to be understood that the processor in the embodiments of the present disclosure may be an integrated circuit chip with signal processing capacity. In the implementation process, various operations of the above method embodiments may be completed by integrated logic circuits of hardware in the processor or instructions in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software modules may be located in a mature storage medium in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It is to be understood that the memory in the embodiments of the present disclosure may be a volatile memory or a non-volatile memory, or may include both the volatile memory and the non-volatile memory. The non-volatile memory may be an ROM, a Programmable ROM (PROM), an Erasable PROM (EPROM), an Electrically EPROM (EEPROM) or a flash memory. The volatile memory may be a Random Access Memory (RAM) and is used as an external high-speed cache. It is exemplarily but unlimitedly described that RAMs in various forms may be adopted, such as a static RAM (SRAM), a dynamic RAM (DRAM), a Synchronous DDRAM (SDRAM), a double data rate SDRAM (DDR SDRAM), an Enhanced SDRAM (ESDRAM), a Synchlink DRAM (SLDRAM) and a Direct Rambus RAM (DR RAM). It is to be noted that the memory of the systems and methods includes described in the specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiments f the disclosure are intended to include, but not limited to, these and any other suitable types of memories.

An embodiment of the present disclosure further provides a computer-readable storage medium configured to store a computer program.

Optionally, the computer-readable storage medium may be applied to the first device in the embodiments of the present disclosure. The computer program causes the computer to implement the corresponding flow implemented by the first device in various methods in the embodiments of the present disclosure. For brevity, details are not elaborated herein again.

Optionally, the computer-readable storage medium may be applied to the A-IoT device in the embodiments of the present disclosure. The computer program causes the computer to implement the corresponding flow implemented by the A-IoT device in various methods in the embodiments of the present disclosure. For brevity, details are not elaborated herein again.

An embodiment of the present disclosure further provides a computer program product including computer program instructions.

Optionally, the computer program product may be applied to the first device in the embodiments of the present disclosure. The computer program instructions cause the computer to implement the corresponding flow implemented by the first device in various methods in the embodiments of the present disclosure. For brevity, details are not elaborated herein again.

Optionally, the computer program product may be applied to the A-IoT device in the embodiments of the present disclosure. The computer program instructions cause the computer to implement the corresponding flow implemented by the A-IoT device in various methods in the embodiments of the present disclosure. For brevity, details are not elaborated herein again.

An embodiment of the present disclosure further provides a computer program.

Optionally, the computer program may be applied to the first device in the embodiments of the present disclosure, and the computer program, when is run on a computer, causes the computer to perform the corresponding flows performed by the first device in various methods of the embodiments of the present disclosure. For brevity, details are not described herein again.

Optionally, the computer program may be applied to the A-IoT device in the embodiments of the present disclosure, and the computer program, when is run on a computer, causes the computer to perform the corresponding flows performed by the A-IoT device in various methods of the embodiments of the present disclosure. For brevity, details are not described herein again.

Those of ordinary skill in the art may realize that units and algorithm steps of various examples described in combination with the embodiments disclosed in the present disclosure herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the aforementioned apparatuses and units, reference may be made to the corresponding processes in the aforementioned method embodiments, and such specific working processes of the systems, devices and units are not described herein again for the purpose of convenient and brief description

In the several embodiments provided in the present disclosure, it is to be understood that the disclosed system, devices, and method may be implemented in other modes. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

If the function is implemented in the form of a software functional unit and sold or used as an independent product, it may also be stored in a computer-readable storage medium. Based on this understanding, the technical solutions of the disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the methods described in various embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A communication method, applied to a first device, the method comprising:
transmitting a plurality of first channels, wherein the plurality of first channels occupy different time ranges and a same frequency range, different first channels among the plurality of first channels are received by different Ambient Internet of Things (A-IoT) devices or a same A-IoT device, and the first channels are control channels or data channels.

2. The method of claim 1, wherein
the plurality of first channels are located within one or more Orthogonal Frequency Division Multiplexing (OFDM) symbols;
in a case where the first device is a network device, the one or more OFDM symbols are located at an end of one slot; and
in a case where the first device is a terminal device, the one or more OFDM symbols are located at a start and/or an end of one slot.

3. The method of claim 1 or 2, wherein
the plurality of first channels are located within one or more Orthogonal Frequency Division Multiplexing (OFDM) symbols; and
the one or more OFDM symbols are: OFDM symbols, other than at least one first OFDM symbol, within a first slot; and in a case where the first device is a terminal device, the first slot, and a start point and a length of the at least one first OFDM symbol, are indicated by a network device.

4. The method of claim 3, wherein
in the case where the first device is the terminal device, the first slot is indicated through Downlink Control Information (DCI) or a configured grant from the network device, and the start point and the length of the at least one first OFDM symbol are indicated through a Radio Resource Control (RRC) configuration parameter from the network device; or
in the case where the first device is the terminal device, the first slot, and the start point and length of the at least one first OFDM symbol, are indicated by a DCI or a configured grant from the network device.

5. The method of claim 1 or 2, wherein
the plurality of first channels are located within one or more Orthogonal Frequency Division Multiplexing (OFDM) symbols; and
the one or more OFDM symbols are: at least one second OFDM symbol within a first slot; and in a case where the first device is a terminal device, the first slot, and a start point and a length of the at least one second OFDM symbol, are indicated by a network device.

6. The method of claim 5, wherein
in the case where the first device is the terminal device, the first slot, and the start point and the length of the at least one second OFDM symbol, are indicated through Downlink Control Information (DCI) or a configured grant from the network device.

7. The method of any one of claims 1 to 6, wherein
the plurality of first channels are consecutive in a time domain; or gap(s) exist between the plurality of first channels.

8. The method of any one of claims 1 to 7, wherein
the plurality of first channels are the control channels, a chip length of one of the control channels being less than a chip length of a data channel associated with the control channel.

9. The method of any one of claims 1 to 7, wherein
the plurality of first channels are the data channels, each of the plurality of first channels occupying a same duration, or a part of the plurality of first channels occupying different durations; and
in a case where the part of the plurality of first channels occupy different durations, the A-IoT device receiving a first data channel knows a duration occupied by the first data channel before receiving the first data channel, the first data channel being comprised in the plurality of first channels.

10. The method of any one of claims 1 to 9, wherein
the plurality of first channels are located within one or more Orthogonal Frequency Division Multiplexing (OFDM) symbols; and
in a case where the first channels are the control channels, the plurality of first channels are modulated on a first carrier within the one or more OFDM symbols, no carrier other than the first carrier exists within the one or more OFDM symbols;
in a case where the first channels are the data channels, the plurality of first channels are modulated on a part of subcarriers within the one or more OFDM symbols.

11. The method of any one of claims 1 to 10, further comprising: in the case where the first channels are the control channels,
transmitting a plurality of second channels, wherein the plurality of second channels occupy different frequency ranges and a same time range, different second channels among the plurality of second channels are received by different A-IoT devices or a same A-IoT device, and the second channels are data channels.

12. The method of claim 11, wherein
the plurality of second channels are transmitted on a plurality of frequency segments, the plurality of frequency segments being pre-configured, or configured by the first device, and a gap exists or no gap exists between different frequency segments.

13. The method of claim 12, wherein
in one of the frequency segments, a carrier frequency for transmitting the second channel is a center frequency of the frequency segment.

14. The method of claim 12 or 13, wherein
part or all of the plurality of second channels are transmitted to a first A-IoT device; and
the plurality of frequency segments comprise: a frequency segment used by the first A-IoT device by default for channel reception, and/or a frequency segment reported by the first A-IoT device, the frequency segment reported by the first A-IoT device comprising all or part of frequency segments available for the channel reception by the first A-IoT device.

15. The method of claim 11, wherein
the plurality of second channels are transmitted on a plurality of carrier frequencies, the plurality of carrier frequencies being pre-configured, or configured by the first device.

16. The method of claim 15, wherein
part or all of the plurality of second channels are transmitted to a first A-IoT device; and
the plurality of carrier frequencies comprise: a carrier frequency used by the first A-IoT device by default for channel reception, and/or a carrier frequency reported by the first A-IoT device, the carrier frequency reported by the first A-IoT device comprising all or part of carrier frequencies available for the channel reception by the first A-IoT device.

17. The method of claim 15 or 16, wherein
a bandwidth for transmitting the plurality of second channels is a preconfigured or predefined first bandwidth, the first bandwidth being less than a carrier bandwidth, and the plurality of carrier frequencies being comprised in a frequency range corresponding to the carrier bandwidth.

18. The method of claim 11, wherein
the plurality of second channels are transmitted on a plurality of carrier groups, each carrier group being used for transmitting one second channel, and each carrier group comprising one or more subcarriers.

19. The method of claim 18, wherein
the plurality of carrier groups comprise a first subcarrier, a frequency of the first subcarrier being related to following parameters:
a frequency reference point;
an index of a carrier group where the first subcarrier is located; and
a reference subcarrier spacing.

20. The method of claim 18 or 19, wherein
in a case where the first device is a terminal device, the plurality of carrier groups are indicated through Downlink Control Information (DCI) or a configured grant from a network device.

21. The method of any one of claims 18 to 20, wherein
the plurality of first channels comprise a first control channel, the first control channel being associated with at least one of the plurality of second channels, and the at least one of the plurality of second channels being transmitted on at least one of the plurality of carrier groups, wherein the first control channel carries an index of the at least one carrier group.

22. The method of any one of claims 18 to 20, further comprising: before transmitting the plurality of second channels,
transmitting first indication information to a first A-IoT device, wherein the first indication information is used for indicating an index of at least one carrier group, the index of the at least one carrier group is used for the first A-IoT device to receive the second channel on the at least one carrier group, and the at least one carrier group is comprised in the plurality of carrier groups.

23. The method of any one of claims 1 to 22, wherein
the first device is a network device or a terminal device.

24. A communication method, applied to an Ambient Internet of Things (A-IoT) device, comprising:
receiving at least one first channel from a first device, wherein the at least one first channel is all or a part of a plurality of first channels transmitted by the first device, the plurality of first channels occupy different time ranges and a same frequency range, and the first channels are control channels or data channels.

25. The method of claim 24, wherein
the plurality of first channels are located within one or more Orthogonal Frequency Division Multiplexing (OFDM) symbols;
in a case where the first device is a network device, the one or more OFDM symbols are located at an end of one slot; and
in a case where the first device is a terminal device, the one or more OFDM symbols are located at a start and/or an end of one slot.

26. The method of claim 24 or 25, wherein
the plurality of first channels are consecutive in a time domain; or gap(s) exist between the plurality of first channels.

27. The method of any one of claims 24 to 26, wherein
the plurality of first channels are the control channels, a chip length of one of the control channels being less than a chip length of a data channel associated with the control channel.

28. The method of any one of claims 24 to 26, wherein
the plurality of first channels are the data channels, each of the plurality of first channels occupying a same duration, or a part of the plurality of first channels occupying different durations; and
in a case where the part of the plurality of first channels occupy different durations, the A-IoT device knows a duration occupied by a first data channel before receiving the first data channel, the first data channel being comprised in the at least one first channel.

29. The method of any one of claims 24 to 28, wherein
the plurality of first channels are located within one or more Orthogonal Frequency Division Multiplexing (OFDM) symbols; and
in a case where the first channels are the control channels, the plurality of first channels are modulated on a first carrier within the one or more OFDM symbols, no carrier other than the first carrier exists within the one or more OFDM symbols;
in a case where the first channels are the data channels, the plurality of first channels are modulated on a part of subcarriers within the one or more OFDM symbols.

30. The method of any one of claims 24 to 29, further comprising: in the case where the first channels are the control channels,
receiving at least one second channel from the first device, wherein the at least one second channel is all or a part of a plurality of second channels transmitted by the first device, the plurality of second channels occupy different frequency ranges and a same time range, and the second channels are the data channels.

31. The method of claim 30, wherein
at least one frequency segment for receiving the at least one second channel comprises: a frequency segment used by the A-IoT device by default for channel reception, and/or a frequency segment reported by the A-IoT device, the frequency segments reported by the A-IoT device comprising all or part of frequency segments available for the channel reception by the A-IoT device.

32. The method of claim 30, wherein
at least one carrier frequency for receiving the at least one second channel comprise: a carrier frequency used by the A-IoT device by default for channel reception, and/or a carrier frequency reported by the A-IoT device, the carrier frequency reported by the A-IoT device comprising all or part of carrier frequencies available for the channel reception by the A-IoT device.

33. The method of claim 30, wherein
at least one carrier group for receiving the at least one second channel is indicated through the at least one first channel, or indicated through first indication information from the first device.

34. The method of any one of claims 24 to 33, wherein
the first device is a network device or a terminal device.

35. A communication method, applied to a first device, the method comprising:
transmitting a plurality of first channels, wherein the plurality of first channels occupy different frequency ranges and a same time range, different first channels among the plurality of first channels are received by different Ambient Internet of Things (A-IoT) devices or a same A-IoT device, and the first channels are control channels or data channels.

36. The method of claim 35, wherein
the plurality of first channels are transmitted on a plurality of frequency segments, the plurality of frequency segments being pre-configured, or configured by the first device, and a gap exists or no gap exists between different frequency segments.

37. The method of claim 36, wherein
in one of the frequency segments, a carrier frequency for transmitting the first channel is a center frequency of the frequency segment.

38. The method of claim 36 or 37, wherein
part or all of the plurality of first channels are transmitted to a first A-IoT device; and
the plurality of frequency segments comprise: a frequency segment used by the first A-IoT device by default for channel reception, and/or a frequency segment reported by the first A-IoT device, the frequency segment reported by the first A-IoT device comprising all or part of frequency segments available for the channel reception by the first A-IoT device.

39. The method of claim 35, wherein
the plurality of first channels are transmitted on a plurality of carrier frequencies, the plurality of carrier frequencies being pre-configured, or configured by the first device.

40. The method of claim 39, wherein
part or all of the plurality of first channels are transmitted to a first A-IoT device; and
the plurality of carrier frequencies comprise: a carrier frequency used by the first A-IoT device by default for channel reception, and/or a carrier frequency reported by the first A-IoT device, the carrier frequency reported by the first A-IoT device comprising all or part of carrier frequencies available for the channel reception by the first A-IoT device.

41. The method of claim 39 or 40, wherein
a bandwidth for transmitting the plurality of first channels is a preconfigured or predefined first bandwidth, the first bandwidth being less than a carrier bandwidth, and the plurality of carrier frequencies being comprised in a frequency range corresponding to the carrier bandwidth.

42. The method of any one of claims 36 to 41, further comprising: in the case where the first channels are the control channels,
transmitting a plurality of second channels on a plurality of carrier groups within a same time range, wherein each of the plurality of carrier groups is used for transmitting one of the plurality of second channel, each of the plurality of carrier groups comprises one or more subcarriers, and different second channels among the plurality of second channels are received by different A-IoT devices or a same A-IoT device, and the second channels are data channels.

43. The method of claim 42, wherein
the plurality of carrier groups comprise a first subcarrier, a frequency of the first subcarrier being related to following parameters:
a frequency reference point;
an index of a carrier group where the first subcarrier is located; and
a reference subcarrier spacing.

44. The method of claim 42 or 43, wherein
in a case where the first device is a terminal device, the plurality of carrier groups are indicated through Downlink Control Information (DCI) or a configured grant from a network device.

45. The method of any one of claims 42 to 44, wherein
the plurality of first channels comprise a first control channel, the first control channel being associated with at least one of the plurality of second channels, and the at least one of the plurality of second channels being transmitted on at least one of the plurality of carrier groups, wherein the first control channel carries an index of the at least one carrier group.

46. The method of any one of claims 42 to 44, further comprising: before transmitting the plurality of second channels on the plurality of carrier groups within the same time range,
transmitting first indication information to a first A-IoT device, wherein the first indication information is used for indicating an index of at least one carrier group, the index of the at least one carrier group is used for the first A-IoT device to receive the second channel on the at least one carrier group, and the at least one carrier group is comprised in the plurality of carrier groups.

47. The method of claim 35, wherein
the plurality of first channels are transmitted on a plurality of first carrier groups, each first carrier group being used for transmitting one first channel, and each carrier group comprising one or more subcarriers.

48. The method of claim 47, wherein
the plurality of first carrier groups comprise a first subcarrier, a frequency of the first subcarrier being related to following parameters:
a first frequency reference point;
an index of a first carrier group where the first subcarrier is located; and
a first reference subcarrier spacing.

49. The method of claim 47 or 48, wherein
in a case where the first device is a terminal device, the plurality of first carrier groups are indicated through Downlink Control Information (DCI) or a configured grant from a network device.

50. The method of any one of claims 47 to 49, further comprising: in the case where the first channels are the control channels,
transmitting a plurality of second channels on a plurality of second carrier groups within a same time range, wherein each second carrier groups is used for transmitting one of the plurality of second channel, each second carrier groups comprises one or more subcarriers, and different second channels among the plurality of second channels are received by different A-IoT devices or a same A-IoT device, and the second channels are data channels.

51. The method of claim 50, wherein
the plurality of second carrier groups comprise a second subcarrier, a frequency of the second subcarrier being related to following parameters:
a second frequency reference point;
an index of a second carrier group where the second subcarrier is located; and
a second reference subcarrier spacing.

52. The method of claim 50 or 51, wherein
in a case where the first device is a terminal device, the plurality of second carrier groups are indicated through Downlink Control Information (DCI) or a configured grant from a network device.

53. The method of any one of claims 50 to 52, wherein
the plurality of first channels comprise a first control channel, the first control channel being associated with at least one of the plurality of second channels, and the at least one of the plurality of second channels being transmitted on at least one of the plurality of second carrier groups, wherein the first control channel carries an index of the at least one second carrier group.

54. The method of any one of claims 50 to 52, further comprising: before transmitting the plurality of second channels on the plurality of second carrier groups within the same time range,
transmitting first indication information to a first A-IoT device, wherein the first indication information is used for indicating an index of at least one second carrier group, the index of the at least one second carrier group is used for the first A-IoT device to receive the second channel on the at least one second carrier group, and the at least one second carrier group is comprised in the plurality of second carrier groups.

55. The method of any one of claims 42 to 46 and 50 to 54, wherein
the plurality of first channels comprise a first control channel, the first control channel being associated with at least one of the plurality of second channels, and a chip length of the first control channel being less than a chip length of the at least one of the plurality of second channels.

56. The method of any one of claims 35 to 55, wherein
the plurality of first channels are located within one or more Orthogonal Frequency Division Multiplexing (OFDM) symbols;
in a case where the first device is a network device, the one or more OFDM symbols are located at an end of one slot; and
in a case where the first device is a terminal device, the one or more OFDM symbols are located at a start and/or an end of one slot.

57. The method of any one of claims 35 to 56, wherein
the plurality of first channels are located within one or more Orthogonal Frequency Division Multiplexing (OFDM) symbols; and
the one or more OFDM symbols are: OFDM symbols, other than at least one first OFDM symbol, within a first slot; and in a case where the first device is a terminal device, the first slot, and a start point and a length of the at least one first OFDM symbol, are indicated by a network device.

58. The method of claim 57, wherein
in the case where the first device is the terminal device, the first slot is indicated through Downlink Control Information (DCI) or a configured grant from the network device, and the start point and the length of the at least one first OFDM symbol are indicated through a Radio Resource Control (RRC) configuration parameter from the network device; or
in the case where the first device is the terminal device, the first slot, and the start point and length of the at least one first OFDM symbol, are indicated by a DCI or a configured grant from the network device.

59. The method of any one of claims 35 to 56, wherein
the plurality of first channels are located within one or more Orthogonal Frequency Division Multiplexing (OFDM) symbols; and
the one or more OFDM symbols are: at least one second OFDM symbol within a first slot; and in a case where the first device is a terminal device, the first slot, and a start point and a length of the at least one second OFDM symbol, are indicated by a network device.

60. The method of claim 59, wherein
in the case where the first device is the terminal device, the first slot, and the start point and the length of the at least one second OFDM symbol, are indicated through Downlink Control Information (DCI) or a configured grant from the network device.

61. The method of any one of claims 35 to 60, wherein
the plurality of first channels are located within one or more Orthogonal Frequency Division Multiplexing (OFDM) symbols; and
in a case where the first channels are the control channels, the plurality of first channels are modulated on a first carrier within the one or more OFDM symbols, no carrier other than the first carrier exists within the one or more OFDM symbols;
in a case where the first channels are the data channels, the plurality of first channels are modulated on a part of subcarriers within the one or more OFDM symbols.

62. The method of any one of claims 35 to 61, wherein
the first device is a network device or a terminal device.

63. A communication method, applied to an Ambient Internet of Things (A-IoT) device, comprising:
receiving at least one first channel from a first device, wherein the at least one first channel is all or a part of a plurality of first channels transmitted by the first device, the plurality of first channels occupy different frequency ranges and a same time range, and the first channels are control channels or data channels.

64. The method of claim 63, wherein
at least one frequency segment for receiving the at least one first channel comprises: a frequency segment used by the A-IoT device by default for channel reception, and/or a frequency segment reported by the A-IoT device, the frequency segments reported by the A-IoT device comprising all or part of frequency segments available for the channel reception by the A-IoT device.

65. The method of claim 63, wherein
at least one carrier frequency for receiving the at least one first channel comprise: a carrier frequency used by the A-IoT device by default for channel reception, and/or a carrier frequency reported by the A-IoT device, the carrier frequency reported by the A-IoT device comprising all or part of carrier frequencies available for the channel reception by the A-IoT device.

66. The method of claim 64 or 65, further comprising: in the case where the first channels are the control channels,
receiving at least one second channel from the first device on at least one carrier group, wherein the at least one second channel is all or a part of a plurality of second channels transmitted by the first device, the plurality of second channels occupy different frequency ranges and a same time range, and the second channels are the data channels.

67. The method of claim 66, wherein
at least one carrier group is indicated through the at least one first channel, or indicated through first indication information from the first device.

68. The method of claim 63, wherein
at least one first carrier group for receiving the at least one first channel is indicated by the first device.

69. The method of claim 68, further comprising: in the case where the first channels are the control channels,
receiving at least one second channel from the first device on at least one second carrier group, wherein the at least one second channel is all or a part of a plurality of second channels transmitted by the first device, the plurality of second channels occupy different frequency ranges and a same time range, and the second channels are the data channels.

70. The method of claim 69, wherein
the at least one second carrier group is indicated through the at least one first channel, or indicated through first indication information from the first device.

71. The method of claim 66, 67, 69 or 70, wherein
the plurality of first channels comprise a first control channel, the first control channel being associated with at least one of the plurality of second channels, and a chip length of the first control channel being less than a chip length of the at least one of the plurality of second channels.

72. The method of any one of claims 63 to 71, wherein
the plurality of first channels are located within one or more Orthogonal Frequency Division Multiplexing (OFDM) symbols;
in a case where the first device is a network device, the one or more OFDM symbols are located at an end of one slot; and
in a case where the first device is a terminal device, the one or more OFDM symbols are located at a start and/or an end of one slot.

73. The method of any one of claims 63 to 72, wherein
the plurality of first channels are located within one or more Orthogonal Frequency Division Multiplexing (OFDM) symbols; and
in a case where the first channels are the control channels, the plurality of first channels are modulated on a first carrier within the one or more OFDM symbols, no carrier other than the first carrier exists within the one or more OFDM symbols;
in a case where the first channels are the data channels, the plurality of first channels are modulated on a part of subcarriers within the one or more OFDM symbols.

74. The method of any one of claims 63 to 73, wherein
the first device is a network device or a terminal device.

75. A communication device, comprising:
a first communication unit, configured to transmit a plurality of first channels, wherein the plurality of first channels occupy different time ranges and a same frequency range, different first channels among the plurality of first channels are received by different Ambient Internet of Things (A-IoT) devices or a same A-IoT device, and the first channels are control channels or data channels.

76. A communication device, comprising:
a second communication unit, configured to receive at least one first channel from a first device, wherein the at least one first channel is all or a part of a plurality of first channels transmitted by the first device, the plurality of first channels occupy different time ranges and a same frequency range, and the first channels are control channels or data channels.

77. A communication device, comprising:
a third communication unit, configured to transmit a plurality of first channels, wherein the plurality of first channels occupy different frequency ranges and a same time range, different first channels among the plurality of first channels are received by different Ambient Internet of Things (A-IoT) devices or a same A-IoT device, and the first channels are control channels or data channels.

78. A communication device, comprising:
a fourth communication unit, configured to receive at least one first channel from a first device, wherein the at least one first channel is all or a part of a plurality of first channels transmitted by the first device, the plurality of first channels occupy different frequency ranges and a same time range, and the first channels are control channels or data channels.

79. A communication device, comprising:
a memory, configured to store a computer program;
a processor, connected to the memory, configured to invoke and execute the computer program from the memory, to implement the method of any one of claims 1 to 23, or the method of any one of claims 24 to 34, or the method of any one of claims 35 to 62, or the method of any one of claims 63 to 74; and
a transceiver, configured to receive and transmit information in a procedure of transceiving information with other devices.

80. A chip, comprising:
a processor, configured to invoke and execute a computer program from a memory, to enable a device on which the chip is mounted to perform the method of any one of claims 1 to 23, or the method of any one of claims 24 to 34, or the method of any one of claims 35 to 62, or the method of any one of claims 63 to 74; and
a transceiver, configured to receive and transmit information in a procedure of transceiving information with a device or a chip.

81. A computer-readable storage medium configured to store a computer program, wherein the computer program causes a computer to perform the method of any one of claims 1 to 23, or the method of any one of claims 24 to 34, or the method of any one of claims 35 to 62, or the method of any one of claims 63 to 74.

82. A computer program product comprising computer program instructions, wherein the computer program instructions cause a computer to perform the method of any one of claims 1 to 23, or the method of any one of claims 24 to 34, or the method of any one of claims 35 to 62, or the method of any one of claims 63 to 74.

83. A computer program that causes a computer to perform the method of any one of claims 1 to 23, or the method of any one of claims 24 to 34, or the method of any one of claims 35 to 62, or the method of any one of claims 63 to 74.
